# EUROPÄISCHE PATENTSCHRIFT

(11) **EP 4 434 721 B1**
(45) Veröffentlichungstag und Bekanntmachung des Hinweises auf die Patenterteilung: **25.11.2026**
(21) Anmeldenummer: 24164024.2
(22) Anmeldetag: 18.03.2024
(51) Int. Cl.: B29C 51/08, B29C 51/10, B29C 51/20, B29L 31/00

(54) **FORMWERKZEUG ZUR HERSTELLUNG VON FORMTEILEN UND VERFAHREN ZUR HERSTELLUNG VON FORMTEILEN UNTER VERWENDUNG EINES FORMWERKZEUGS**
MOLD FOR PRODUCING MOLDED PARTS AND METHOD FOR PRODUCING MOLDED PARTS USING A MOLD
MOULE POUR LA FABRICATION DE PIÈCES MOULÉES ET PROCÉDÉ DE FABRICATION DE PIÈCES MOULÉES À L'AIDE D'UN MOULE

(30) Priorität: 20.03.2023 DE 102023106948
(43) Veröffentlichungstag der Anmeldung: 25.09.2024
(73) Patentinhaber: KIEFEL GmbH, 83395 Freilassing (DE)
(72) Erfinder: van der Schans, Johannes Marius, 5161 XG Sprang-Capelle (NL); Decoz, Cornelis Hendrikus Albertinus, 5161 ES Sprang-Capelle (NL)
(74) Vertreter: DTS Patent- und Rechtsanwälte PartmbB

(56) Entgegenhaltungen:
- WO-A1-2008/101258
- WO-A1-2009/090397
- US-A- 4 338 070
- US-A- 5 494 546
- US-A1- 2008 014 453
- US-A1- 2019 176 414

## Beschreibung

### Technisches Gebiet

Es werden ein Formwerkzeug zur Herstellung von Formteilen aus einem formbaren Material und ein Verfahren zur Herstellung von Formteilen aus einem formbaren Material unter Verwendung eines Formwerkzeugs beschrieben. Als formbares Material können bspw. Folien aus Kunststoff, Folien mit Öffnungen, bspw. mit einer netzartigen Struktur, und/oder faserhaltige Materialien verwendet werden.

### Hintergrund

Zum Umformen und/oder Verpressen von formbaren Materialien werden in der Regel Formwerkzeuge verwendet, wobei das formbare Material in eine Kavität eingebracht und dort mit Hilfe von Druck oder durch Erzeugen von Überdruck oder Unterdruck in der Kavität bzw. einer Formkammer verformt wird. Ein Einbringen von Gas/Gasgemisch (z.B. Formluft) in die Kavität oder das Erzeugen eines Vakuums werden beim klassischen Thermoformen verwendet. Hierbei wird bspw. eine Folie in der Kavität entweder durch den Überdruck gegen eine Formwand der Kavität gedrückt oder eine Folie an die Formwand einer Kavität angesaugt.

Beim Formen von Formteilen aus einem faserhaltigen Material wird in der Regel das Material eingebracht und dort zwischen Formflächen eines Formwerkzeugs verpresst, wobei im Gegensatz zur Umformung bei Folien eine Reduzierung der Wandstärke bzw. Dicke des zu verpressenden Vorformlings bei gleichzeitig sehr hoher Temperatur (> 200 °C) erfolgt. Es kann dabei bspw. ein Vorformling in die Kavität eingebracht werden, der sich hinsichtlich Feuchtigkeit, Form, Größe und Stärke/Dicke vom herzustellenden Erzeugnis unterscheidet. Es können weiterhin auch lose Fasern in eine Kavität eingebracht und zwischen Formflächen eines Formwerkzeugs verpresst werden.

Zum Umformen der unterschiedlichen Materialien sind daher stets verschiedene Werkzeugausbildungen erforderlich. Zudem weisen die jeweiligen Werkzeugausbildungen verschiedene Nachteile auf. So ist die Formgebung für Erzeugnisse stark eingeschränkt, bspw. im Hinblick auf Hinterschnitte und Ränder am Boden der Erzeugnisse bzw. Formteile. Im Stand der Technik können so geformte Erzeugnisse nur mit einem hohen Aufwand und komplexen Formwerkzeugen hergestellt werden, die eine Vielzahl an beweglichen Komponenten aufweisen. Des Weiteren ist es bspw. mit klassischen Thermoformwerkzeugen nicht möglich, Folien mit Öffnungen, bspw. einer netzartigen Struktur, umzuformen, da in der Kavität ein Überdruck oder Unterdruck keine Verformung bereitstellen kann, weil die eingebrachte oder angesaugte Formluft durch die Öffnungen zu einem Druckausgleich auf beiden Seiten der Folie führt.

Darüber hinaus ist es beim klassischen Thermoformen erforderlich, Überdruck oder Unterdruck bereitzustellen, um eine Folie zu verformen.

Weiterer Stand der Technik ist in folgenden Dokumenten beschrieben: US 4 338 070 A, WO 2008/101258 A1, US 5 494 546 A, US 2008/014453 A1, WO 2009/090397 A1 sowie US 2019/176414 A1. In der Druckschrift US 2008/014453 A1 wird eine Vorrichtung gemäß dem Oberbegriff des Anspruchs 1 offenbart.

### Aufgabe

Demgegenüber besteht die Aufgabe darin, eine Lösung zur Herstellung von Formteilen aus einem formbaren Material anzugeben, welche die Nachteile des Stands der Technik behebt und bei welcher mit einfachen Mitteln bei gleichzeitig reduziertem Einsatz von Hilfsmitteln eine Verformung erreicht wird, die keinen Einschränkungen im Hinblick auf die Gestalt der herzustellenden Formteile unterliegt.

### Lösung

Die vorstehend genannte Aufgabe wird durch ein Formwerkzeug mit den Merkmalen von Anspruch 1 gelöst. Dieses weist mindestens eine erste Werkzeugkomponente und eine zweite Werkzeugkomponente auf, wobei
- die erste Werkzeugkomponente eine Kavität aufweist, in welche formbares Material einbringbar ist,
- die zweite Werkzeugkomponente ein Formelement aufweist, das zur Herstellung eines Formteils in die Kavität der ersten Werkzeugkomponente einbringbar ist,
- das Formelement eine zweite Formfläche aufweist, über welche im geschlossenen Zustand des Formwerkzeugs formbares Material gegen eine korrespondierende erste Formfläche der Kavität der ersten Werkzeugkomponente drückbar ist, und
- mindestens ein Abschnitt der zweiten Formfläche ein flexibles Material aufweist, welches im geschlossenen Zustand des Formwerkzeugs durch Einbringen eines Mediums über das Formelement verformbar ist, um das formbare Material gegen die erste Formfläche zu drücken.

Das Formwerkzeug ermöglicht bspw. die Verformung von Folien aus Kunststoff, wobei gegenüber klassischen Thermoformwerkzeugen und -verfahren deutlich weniger Formluft zur Verformung benötigt wird, weil die Verformung nicht durch die Erzeugung von Unterdruck oder Überdruck erfolgen kann, wenn das flexible Material bspw. die gesamte zweite Formfläche bildet, sondern durch die Verformung des flexiblen Materials. Aus diesem Grund kann sich daher auch der Aufbau des Formwerkzeugs einfacher gestalten, da keine Abdichtung erfolgen muss, um Unterdruck- oder Überdruckbereiche zu erzeugen. Darüber hinaus können mit einem solchen Formwerkzeug auch netzartige Folien aus Kunststoff verformt werden, weil für die Verformung kein Unterdruck oder Überdruck notwendig ist.

Das Formelement kann auch als Streckhelfer dienen und eine Folie, gleich ob diese netzartig oder geschlossen ausgebildet ist, vor einer finalen Formgebung, welche bspw. durch die Verformung des flexiblen Materials durchgeführt wird, vorstrecken, wobei die Folie in eine Kavität gedrückt wird.

Des Weiteren kann über ein solches Formwerkzeug auch ein Verformen von Formteilen aus einem faserhaltigen Material erfolgen. Hierbei kann ein solches Formwerkzeug bspw. sowohl zum Verpressen von trockenen Fasern ("Dry Fiber") als auch eines feuchten Vorformlings ("Wet Fiber") eingesetzt werden. Ein feuchtes Material als formbares Material liegt ab einem Wasseranteil von etwa 30 Gew.-% vor. Ein Material mit einem Wasseranteil kleiner 30 Gew.-% wird als trockenes Material bezeichnet.

Bei der Herstellung von Formteilen aus einem faserhaltigen Material kann zuerst faserhaltiges Material in die Kavität eingebracht werden, wobei sich eine Faserschicht an der ersten Formfläche anlegt. Das Anlegen der Faserschicht kann auch durch das Einbringen des Formelements unterstützt werden, welches die Fasern gegen die erste Formfläche drückt. Hierzu kann das flexible Material insbesondere eine verhältnismäßig große Wandstärke bzw. Dicke aufweisen, wobei das flexible Material beim Andrücken des faserhaltigen Materials zumindest geringfügig nachgeben kann. Anschließend erfolgt das Einbringen eines Mediums, so dass das flexible Material verformt wird und sich ausdehnt, so dass das faserhaltige Material zusammengedrückt und gegen die erste Formfläche gedrückt wird. Hierzu kann bspw. die zweite Formfläche vollständig durch das flexible Material gebildet sein. Dabei erfolgt ein Verpressen der eingebrachten Faserschicht. Hierbei kommt es aufgrund der Verformung des flexiblen Materials zu einer Verkleinerung des Abstands zwischen der ersten Formfläche und der Oberfläche der zweiten Werkzeugkomponente, so dass die Faserschicht komprimiert wird. Dabei wird die Faserschicht verpresst, so dass eine Verbindung der Fasern erreicht werden kann. In weiteren Ausführungen kann zusätzlich oder alternativ ein Auspressen von Wasser beim Überdrücken durch die Komprimierung des Fasermaterials erfolgen.

Je nach Ausbildung der zweiten Werkzeugkomponente und des Formelements kann die zweite Formfläche in weiteren Ausführungen bspw. nur bereichsweise ein flexibles Material aufweisen, so dass eine Verformung der zweiten Formfläche auch nur bereichsweise in der Kavität erfolgt, d.h. dass es nur in korrespondierenden Bereichen der ersten Formfläche zu einem Andrücken oder zusätzlichem Andrücken einer Folie oder eines Fasermaterials über das flexible Material kommt. Somit kann in weiteren Ausführungen, bspw. für eine Folie mit einer netzartigen Struktur, auch eine Kombination aus Formgebung über einen Formstempel und ein flexibles Material vorgesehen sein. Dabei kann ein Formstempel nicht nur als Streckhelfer dienen, wobei eine Folie in die Kavität hineingedrückt und vorgeformt wird, sondern auch über die zweite Formfläche des Formelements, welche teilweise durch den Formstempel gebildet sein kann, gegen die erste Formfläche der Kavität gedrückt werden. Über das flexible Material kann anschließend eine zusätzliche Verformung stattfinden, bspw. zur Ausbildung eines Hinterschnitts.

In weiteren Ausführungen kann die Kavität mindestens einen Hinterschnitt aufweisen und das formbare Material durch den mindestens partiell ein flexibles Material aufweisenden mindestens einen Abschnitt der zweiten Formfläche in den Hinterschnitt der Kavität drückbar sein. Es kann ein formbares Material, faserhaltiges Material oder bspw. Kunststoffmaterial (Folie; Netzstruktur) bspw. über die zweite Formfläche eines Formstempels (Formelement) im Wesentlichen gegen die erste Formfläche der Kavität gedrückt werden, wobei der Hinterschnitt frei bleibt. Erst durch Einbringen des Mediums kommt es zu einer Verformung des flexiblen Materials und das formbare Material wird hierüber in den Hinterschnitt gedrückt und final verformt. Dabei kann der mindestens eine Abschnitt der zweiten Formfläche mit dem flexiblen Material im geschlossenen Zustand des Formwerkzeugs einem Bereich der ersten Formfläche mit dem mindestens einen Hinterschnitt gegenüberliegen.

In weiteren Ausführungen kann die im geschlossenen Zustand des Formwerkzeugs in die Kavität der ersten Werkzeugkomponente eintauchende zweite Formfläche vollständig ein flexibles Material aufweisen bzw. vollständig durch ein flexibles Material gebildet sein, so dass im Wesentlichen die gesamte zweite Formfläche durch Einbringen eines Mediums (Gas, Gasgemisch, Fluid) verformt wird und die finale Verformung des in die Kavität eingebrachten formbaren Materials bewirkt. Hierbei kommt es nur über das flexible Material zu einer finalen Formgebung, wobei kein Unterdruck oder Überdruck in der Kavität erzeugt werden muss und damit bspw. weniger Formluft benötigt wird, die bspw. nur zum Verformen des flexiblen Materials über Kanäle im Formelement eingebracht wird. In solchen Ausführungen kann bspw. über das flexible Material eine definierte Materialverteilung des formbaren Materials in der Kavität erreicht werden, weil das formbare Material bspw. nicht angesaugt wird, sondern über das flexible Material gedrückt wird. Bspw. kann erwärmter Kunststoff einer Folie innerhalb einer Kavität zwischen der ersten Formfläche und der zweiten Formfläche vor dem Einbringen eines Mediums mit den Formflächen in Anlage stehen. Wird nun Medium eingebracht kann der erwärmte Kunststoff aus diesem Bereich in benachbarte Bereiche verdrängt werden, welche vor dem Einbringen von Medium einen größeren Abstand zwischen erster Formfläche und zweiter Formfläche und somit mehr Raum für den Kunststoff aufweisen.

In weiteren Ausführungen kann die zweite Formfläche Bereiche mit einer unterschiedlichen Struktur oder Materialstärke des flexiblen Materials aufweisen, so dass beim Einbringen des Mediums das flexible Material nicht gleichmäßig verformt wird bzw. sich ausdehnt. Hierbei können in weiteren Ausführungen bspw. bei im Wesentlichen glatten Oberflächenbereichen der ersten Formfläche unterschiedliche Materialstärken des formbaren Materials erreicht werden, wenn sich das flexible Material nicht gleichmäßig verformt. Ferner ist es möglich, dass ein gleichmäßiges Andrücken/Pressen von formbarem Material in Bereichen der ersten Formfläche erreicht werden kann, wenn die erste Formfläche bspw. Rillen oder andere Erhebungen und/oder Ausbuchtungen aufweist. Schließlich kann auch eine Materialstärke des herzustellenden Formteils über dessen Geometrie unterschiedlich ausgebildet werden (bspw. stärkerer oder schwächerer Bodenbereich eines Bechers).

In weiteren Ausführungen kann die zweite Formfläche mindestens zwei unterschiedliche flexible Materialien aufweisen, die sich im Hinblick auf die Verformbarkeit des flexiblen Materials unterscheiden, so dass wie vorstehend beschrieben, unterschiedliche Materialstärken des formbaren Materials beim fertigen Formteil erreicht werden können und/oder dass einer entsprechenden Ausbildung der ersten Formfläche Rechnung getragen werden kann, um eine gleichbleibende Material- bzw. Wandstärke eines herzustellenden Produkts zu erreichen.

In weiteren Ausführungen kann das flexible Material sich ringförmig um das Formelement herum erstrecken, so dass bspw. Hinterschnitte hierüber einfach erzeugt werden können. In solchen Ausführungen kann das Formelement bspw. eine im Wesentlichen plane Oberfläche aufweisen, die im Wesentlichen der Gestalt des herzustellenden Formteils entspricht. Das flexible Material kann sich in einer umlaufenden Nut des Formelements im nicht betätigten Zustand befinden, so dass es in diesem Zustand nicht von der restlichen Oberfläche absteht. Erst durch Einbringen des Mediums kommt es zu einer Verformung des flexiblen Materials, welches dann aus der Nut oder einer ähnlichen Vertiefung im Formelement hervortritt und somit eine (weitere) Verformung des formbaren Materials bewirkt. Durch die Verwendung eines flexiblen Materials ist es somit auch möglich, bspw. wellenartige Hinterschnitte zu erzeugen, weil das flexible Material ohne Schwierigkeiten der Kontur eines solchen Hinterschnitts folgen kann. Damit wird hierdurch eine größere Vielfalt bei der Herstellung von Formteilen und der Erzeugung von Funktionselementen (Griffmulden, Halterillen, Logos, etc.) sowie von Hinterschnitten erreicht.

Erfindungsgemäß liegt das flexible Material in einem Ruhezustand, welcher den nicht betätigten Zustand darstellt, wobei kein Einbringen von Medium erfolgt, an dem Formelement an und das Formelement weist in Bereichen mit einem flexiblen Material Öffnungen für das Medium zur Verformung des flexiblen Materials auf. Über die Öffnungen erfolgt das Einbringen des Mediums, welches dazu führt, dass das flexible Material verformt wird. Die Anzahl und Position der Öffnungen sowie der Kanäle können dabei das Verformungsverhalten des flexiblen Materials maßgeblich beeinflussen, so dass hier die Verformung des flexiblen Materials und damit schließlich auch die Ausbildung und Wandstärke des formbaren Materials beeinflusst werden können.

Erfindungsgemäß unterscheiden sich die Öffnungen in Form, Ausgestaltung und/oder Position, bspw. Öffnungsweite, Durchmesser; Querschnitt, Länge etc., nach Maßgabe der Materialstärke des flexiblen Materials, der Zusammensetzung des flexiblen Materials, der Position/Lage des flexiblen Materials, des eingesetzten flexiblen Materials und/oder der Ausbildung der ersten Formfläche voneinander. So kann bspw. durch die Anzahl, Anordnung und Ausbildung der Öffnungen die Verformung von flexiblem Material gezielt beeinflusst werden. Die Ausbildung der Öffnungen kann zusätzlich nach Maßgabe der Auswahl von flexiblen Materialien und/oder der Ausbildung der ersten Formfläche und schließlich auch des herzustellenden Formteils erfolgen. In weiteren Ausführungen können zusätzlich oder alternativ zu einer speziellen Ausbildung der Öffnungen Kanäle zu den Öffnungen im Formkörper eine entsprechende Form, Verlauf, Querschnitt etc. aufweisen, den Austritt (Richtung, Menge, Volumenstrom) des eingebrachten Mediums beeinflussen, um eine festlegbare Verformung des flexiblen Materials für die Ausbildung des Formteils zu erreichen.

In weiteren Ausführungen kann über Einrichtungen die Menge an Medium zu Bereichen mit einem flexiblen Material gesteuert werden, so dass bspw. die Menge an Medium unterschiedlich ist, zeitlich versetzt Medium zugeführt wird und/oder unterschiedlich lange aufrechterhalten wird. Somit lässt sich bspw. die Verformung zeitlich steuern, so dass bspw. auch Bereiche des herzustellenden Formteils unterschiedlich ausgebildet werden können. Bspw. kann erst eine Seitenwand durch Verformung erzeugt werden und zeitlich versetzt eine Rillenstruktur oder ein Hinterschnitt erzeugt werden. Während der Formgebung kann dabei die Temperaturveränderung eine Rolle spielen, so dass zeitlich versetzt stattfindende Verformungen auch unterschiedlich stark ausgeprägt sein können, da es bspw. zu einem Abkühlen oder zusätzlichen Erwärmen des betreffenden Materials kommt. Solche Einrichtungen können bspw. Ventile oder separate Zuführeinrichtungen für Medien sein, die jeweils separat ansteuerbar sind oder sein können.

In weiteren Ausführungen kann auch über eine Temperierung eines Mediums zusätzlich Einfluss auf die Verformbarkeit sowohl des flexiblen Materials als auch des formbaren Materials genommen werden, um unterschiedlich verformte Formteile mit unterschiedlichen Materialverteilungen und/oder Wandstärken zu erzeugen. Hierzu können bspw. gesonderte Temperiereinrichtungen zum Erwärmen/Kühlen eines Mediums vorgesehen sein.

Das Formelement kann bspw. aus einem nichtverformbaren Material, wie bspw. einem Metall oder einer Metalllegierung, bestehen. In weiteren Ausführungen kann das Formelement aus einem Kunststoff bestehen, welcher im Wesentlichen nicht verformbar ist.

In weiteren Ausführungen kann das flexible Material zusätzlich oder alternativ Verstärkungen und/oder Schwachstellen aufweisen, welche die Verformbarkeit des flexiblen Materials beeinflussen.

Zudem kann das flexible Material aus verschiedenen Materialien bestehen, die sich im Hinblick auf die Verformbarkeit des flexiblen Materials unterscheiden.

In weiteren Ausführungen kann die zweite Formfläche mindestens zwei Abschnitte aus einem flexiblen Material aufweisen, die sich im Hinblick auf die Verformbarkeit des flexiblen Materials unterscheiden. Bspw. können so unterschiedlich ausgebildete Hinterschnitte erzeugt werden, die sich in Hinblick auf Tiefe, Größe und/oder Position voneinander unterscheiden. Somit kann bspw. bei gleichem Druck über ein Gasgemisch als Medium eine unterschiedlich starke Verformung und/oder definierte Ausbildung von Wandstärken erreicht werden.

In weiteren Ausführungen kann das flexible Material Silikon und/oder thermoplastische Elastomere aufweisen oder daraus bestehen. Je nach benötigter Verformung aufgrund der Geometrie und Ausgestaltung eines Formteils und der daraus resultierenden Geometrie und Gestalt einer Kavität bzw. der ersten Formfläche können unterschiedlich stark verformbare Materialien eingesetzt werden. Es ist ferner bei der Auswahl an flexiblen Materialien zu berücksichtigen, ob das formbare Material mit dem flexiblen Material kompatibel ist, so dass es zu keiner Beschädigung oder Beeinträchtigung des formbaren Materials sowie des flexiblen Materials kommt. Darüber hinaus ist zu berücksichtigen, welchen Temperaturen das flexible Material ausgesetzt ist. Insbesondere bei der Herstellung von Formteilen aus einem feuchten, faserhaltigen Material wird häufig das Fasermaterial beim Verpressen zusätzlich erwärmt. Daher sind entsprechende Silikone und thermoplastische Elastomere auszuwählen. Bspw. kann eine Temperaturbeständigkeit für das flexible Material von bis zu 300 °C erforderlich sein.

In weiteren Ausführungen kann die erste Formfläche zweite Öffnungen aufweisen, über welche beim Verpressen und bei gleichzeitiger Wärmezufuhr entstehender Wasserdampf bei der Herstellung von Formteilen aus einem faserhaltigen Material abgesaugt bzw. abgeführt werden kann.

In weiteren Ausführungen kann die erste Formfläche zweite Öffnungen aufweisen, über welche beim Verpressen und bei gleichzeitiger Wärmezufuhr entstehender Wasserdampf abgesaugt bzw. abgeführt werden kann.

In weiteren Ausführungen können die Kavität der ersten Werkzeugkomponente und/oder das Formelement der zweiten Werkzeugkomponente über mindestens eine Heizeinrichtung beheizbar sein, so dass bspw. die Feuchtigkeit von faserhaltigem Material reduziert und/oder die Verbindung von Fasern verbessert bzw. unterstützt werden kann. Auch aus Kunststoffen bestehende Folien können in weiteren Anwendungen unter Wärmeeinwirkung leichter verformt werden. Heizeinrichtungen können bspw. Heizpatronen, induktive Heizeinrichtungen etc. umfassen.

Die vorstehend genannte Aufgabe wird auch durch ein Verfahren mit den Merkmalen von Anspruch 11 gelöst.

Mit dem Verfahren lässt sich formbares Material mit einem gegenüber bekannten Thermoformverfahren geringeren Medieneinsatz (bspw. Prozessluft) erzielen, wobei die Formwerkzeugausbildung und das Herstellungsverfahren für verschiedene formbare Materialien verwendet werden können. In Abhängigkeit der Ausbildung des Formwerkzeugs kann das Einbringen eines Mediums von der Position des Formelements derart geregelt sein, dass erst nach Erreichen eines unteren Totpunkts des Formelements ein Medium eingebracht wird. Je nach Ausführung des Formelement und der Ausbildung der zweiten Formfläche kann bspw. der untere Totpunkt des Formelements erreicht sein, wenn eingebrachtes formbares Material sowohl mit der ersten Formfläche als auch mit der zweiten Formfläche in Kontakt steht. Diese Ausführung kann bspw. dann vorliegen, wenn der Bodenbereich des Formelements bzw. der zweiten Formfläche nicht durch ein flexibles Material gebildet ist und damit nicht durch Einbringen eines Mediums verformt wird, wobei in weiteren Ausführungen mit einem Bodenbereich aus flexiblem Material ein Verdrängen von bspw. Kunststoff in Seiten- oder Randbereiche möglich ist. In weiteren Ausführungen mit einem flexiblen Material im Bereich des Bodens der zweiten Formfläche kann der untere Totpunkt des Formelements, je nach vorgesehener Verformung des flexiblen Materials, vorliegen, wenn ein Abstand zwischen der ersten Formfläche und der zweiten Formfläche vorliegt, der größer ist als die Materialstärke des eingebrachten formbaren Materials.

Das Verfahren ermöglicht die Herstellung von Formteilen und die Ausbildung von Strukturen in einem Formteil mit einfachen Mitteln, wobei durch das Einbringen eines Mediums Bereiche mit dem flexiblen Material verformt werden, was zu einer Umformung oder zusätzlichen Umformung des formbaren Materials führt. Die vorstehend für das Formwerkzeug angegebenen Ausführungen und Vorteile gelten in entsprechender Weise für das hierin beschriebene Verfahren.

In weiteren Ausführungen kann die Kavität mindestens einen Hinterschnitt aufweisen und das formbare Material über das flexible Material des mindestens einen Abschnitts der zweiten Formfläche beim Einbringen des Mediums in den Hinterschnitt der Kavität gedrückt werden. Somit wird ein zweistufiges Herstellungsverfahren bereitgestellt, welches sich gegenüber bekannten Verfahren dadurch auszeichnet, dass allein über das Formelement ein Druck ausgeübt wird und eine zusätzliche Verformung durch ein Einbringen eines Mediums erfolgt. Es ist somit nicht erforderlich, weitere formgebende Werkzeugteile zu bewegen und anzusteuern.

In weiteren Ausführungen kann nach dem Formen des Formteils in der Kavität das Einbringen von Medium beendet werden, wodurch das flexible Material seine vor dem Einbringen von Medium vorliegende Form wieder einnimmt und anschließend das Formelement der zweiten Werkzeugkomponente aus der Kavität bewegt wird.

In weiteren Ausführungen kann die Zufuhr mindestens eines Mediums für mindestens einen Teilbereich mindestens eines flexiblen Materials nach Maßgabe der Geometrie des herzustellenden Formteils, der Eigenschaften und Ausbildung des verwendeten flexiblen Materials und/oder des eingesetzten Mediums geregelt werden. Die Regelung kann den Zufuhrzeitpunkt, die Zufuhrdauer, den Druck, welcher zeitlich veränderbar sein kann, und /oder die Temperierung des Mediums betreffen. In noch weiteren Ausführungen kann bspw. ein bei mehreren flexiblen Bereichen, welche separat ansteuerbar und durch ein Medium verformbar sein können, ein kontinuierliches oder stufenweises Verformen der Bereiche mit den flexiblen Materialien erreichet werden, so dass bspw. Kunststoff von einem Bereich in mindestens einen benachbarten Bereich kontinuierlich oder stufenweise gedrückt wird.

In noch weiteren Ausführungen kann bspw. eine rillenartige Struktur (horizontal oder vertikal) an einem Formteil durch eine der Anzahl an Rillen entsprechende Anzahl an Bereichen mit flexiblem Material erreicht werden, welche gemeinsam mit Medium beaufschlagt werden und sich im Wesentlichen entlang ihrer Längsachse- oder Linie "bauchförmig" ausdehnen, so dass zwischen benachbarten "bauchförmigen" Bereichen Bereiche im Formteil erzeugt werden, die eine größere Materialstärke nach dem Umformen aufweisen.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung einer Faserformanlage zur Herstellung von Produkten aus einem Fasermaterial;
- Fig. 2: eine schematische Darstellung eines Formwerkzeugs zur Herstellung von Formteilen;
- Fig. 3: eine schematische Darstellung des Formwerkzeugs von Fig. 2 nach dem Einbringen eines formbaren Materials;
- Fig. 4: eine schematische Darstellung des Formwerkzeugs von Fig. 2 in einem ersten Formschritt;
- Fig. 5: eine schematische Darstellung des Formwerkzeugs von Fig. 2 in einem zweiten Formschritt;
- Fig. 6: eine schematische Darstellung des Formwerkzeugs von Fig. 2 in einem dritten Formschritt;
- Fig. 7: eine schematische Darstellung des Formwerkzeugs von Fig. 2 nach dem Umformen des verformbaren Materials;
- Fig. 8: eine schematische Darstellung des Formwerkzeugs von Fig. 2 nach einem weiteren Verarbeitungsschritt nach dem Umformen;
- Fig. 9: eine schematische Darstellung eines Formteils;
- Fig. 10: schematische Darstellungen eines Formwerkzeugs zur Herstellung von formbaren Materialien in einer weiteren Ausführungsform;
- Fig. 11: eine schematische Darstellung eines Formwerkzeugs einer noch weiteren Ausführungsform mit eingebrachtem formbarem Material;
- Fig. 12: eine schematische Darstellung des Formwerkzeugs von Fig. 11 während der Umformung des eingebrachten formbaren Materials;
- Fig. 13: eine schematische Darstellung eines Formwerkzeugs in einer noch weiteren Ausführungsform nach der Umformung eines formbaren Materials;
- Fig. 14: eine schematische Darstellung eines weiteren Formteils;
- Fig. 15: schematische Darstellungen eines Formwerkzeugs zur Herstellung von formbaren Materialien in einer noch weiteren Ausführungsform; und
- Fig. 16: ein Verfahren zum Herstellen von Formteilen.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Die Figuren zeigen Ausführungsbeispiele von Vorrichtungen für die Herstellung von Formteilen aus einem formbaren Material, wobei die gezeigten Ausführungsbeispiele keine Einschränkung im Hinblick auf weitere Ausbildungen und Modifikationen der beschriebenen Ausführungen darstellen.

Nachfolgend wird die Herstellung von Formteilen 200 aus einem formbaren Material beschrieben, wobei als formbares Material eine Folie aus einem Kunststoff (bspw. PET, PP, PS, PLA, PE) verwendet wird. Die Folie kann in weiteren Ausführungen auch Öffnungen bzw. eine netzartige Struktur aufweisen, wobei hierzu auf Unterschiede im Werkzeug für die verschiedenen formbaren Materialien gesondert hingewiesen wird.

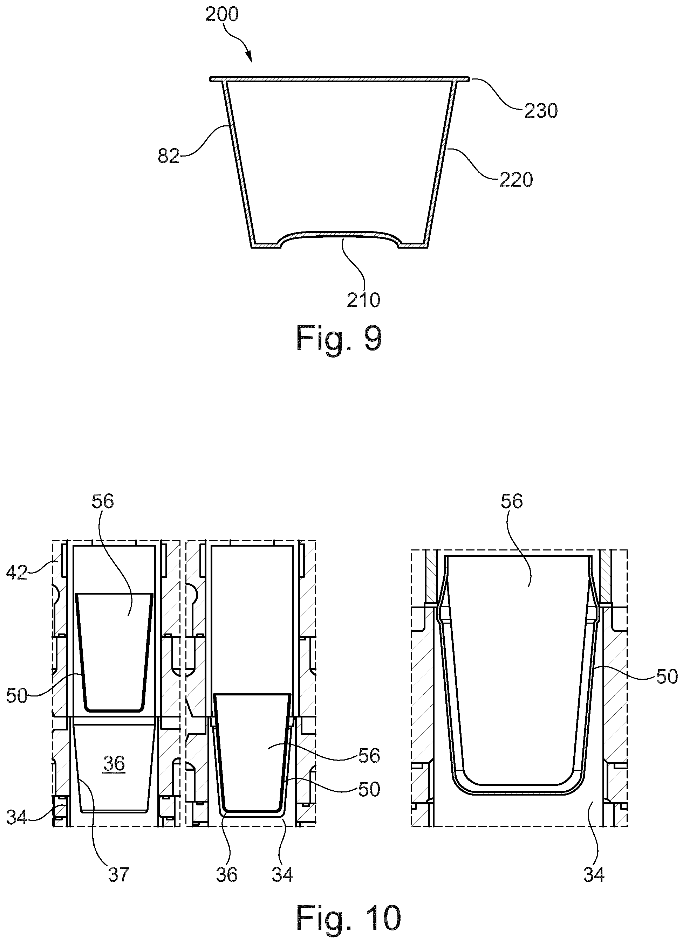

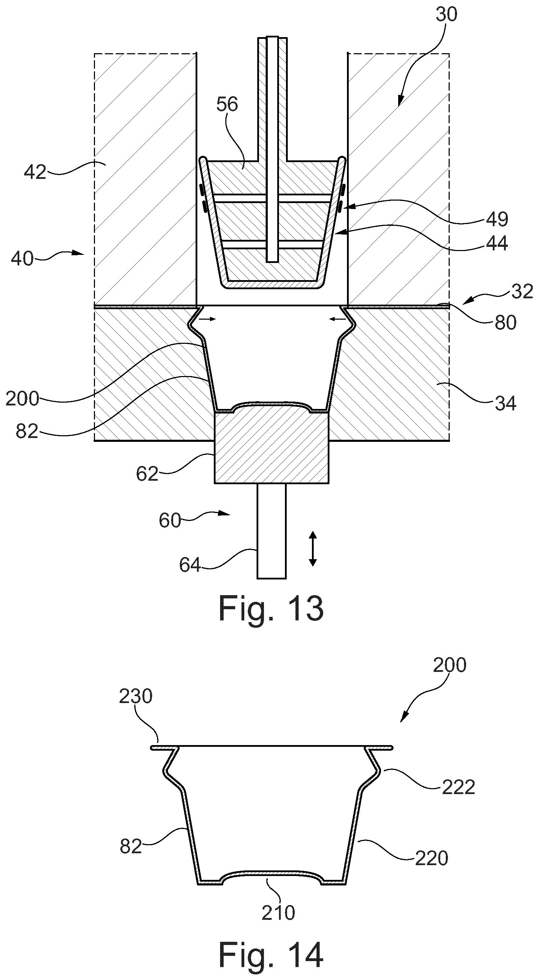

Anstelle einer Kunststofffolie kann mit den nachfolgend beschriebenen Formwerkzeugen 30 auch faserhaltiges Material für die Herstellung von Formteilen 200 eingesetzt werden. Dabei kann es sich sowohl um ein trockenes Fasermaterial als auch um feuchtes bzw. nasses Fasermaterial handeln. Von trockenem Fasermaterial wird regulär bei einem Wasseranteil kleiner 30 Gew.-% gesprochen. Bei einem Wasseranteil ab ca. 30 Gew.-% wird von feuchtem Fasermaterial gesprochen. Das Fasermaterial kann dabei als Vorformling vorliegen und in einem Formwerkzeug 30 weiterverarbeitet werden. Alternativ kann Fasermaterial ohne eine Struktur oder ähnliches in eine Kavität 36 eines Formwerkzeugs 30 eingebracht und dort zu einem Formteil 200 geformt werden. Vorformlinge weisen in der Regel bereits im Wesentlichen die Gestalt des herzustellenden Formteils 200 auf. Insbesondere kann faserhaltiges Material nur natürliche Fasern aufweisen. Ein faserhaltiges Material kann weiter Zusätze aufweisen, welche sich auf die mechanischen Eigenschaften und die Barrierewirkung auswirken. Nach Maßgabe der Zusammensetzung des faserhaltigen Materials können aus einem faserhaltigen, formbaren Material hergestellte Formteile biologisch abbaubar sein und selbst wieder als Ausgangsmaterial für die Herstellung von dreidimensionalen Formteilen, wie bspw. eines becherartigen Formteils 200 (siehe Fig. 9, 14) aus einem faserhaltigen Material, dienen und kompostiert werden, weil diese in der Regel vollständig zersetzt werden können und keine bedenklichen, umweltgefährdenden Stoffe enthalten.

Ein Formteil 200 kann insbesondere ein dreidimensionales Formteil 200 sein, wie bspw. Becher, Deckel, Schalen, Kapseln, Teller und weitere Form- und/oder Verpackungsteile (bspw. als Halter-/Stützstrukturen für elektronische oder andere Geräte).

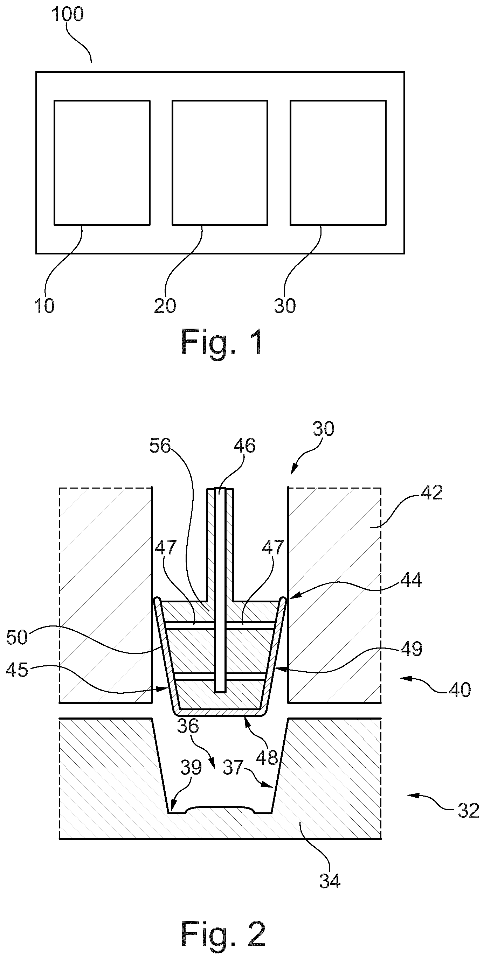

Fig. 1 zeigt eine schematische Darstellung einer Formeinrichtung 100 zur Herstellung von Formteilen 200 aus einem formbaren Material. Die Formeinrichtung 100 weist mindestens eine Steuerung 10, eine Zuführeinrichtung 20 und ein Formwerkzeug 30 zum Formen eines formbaren Materials auf. Die Steuerung 10 dient zur Steuerung der Prozesse und Abläufe der Formeinrichtung 100 und steht hierzu mit den entsprechenden Einrichtungen in Verbindung. Die Steuerung 10 regelt den Energiebedarf und Stoffumsatz und verarbeitet hierzu Informationen und Steuerbefehle. Die Zuführeinrichtung 20 dient zur Zufuhr von formbarem Material, bspw. einer Kunststofffolie, zwischen eine erste Werkzeugkomponente 32 und eine zweite Werkzeugkomponente 40 eines Formwerkzeugs 30, das mindestens eine Kavität 36 aufweist. In dem Formwerkzeug 30 oder vor dem Erreichen der als Folienbahn zugeführten Kunststofffolie 80 wird die Folienbahn erwärmt und zwischen die Werkzeugkomponenten 32 und 40 gebracht. Dort erfolgt über ein Formelement 44 ein Strecken der vorgewärmten Kunststofffolie in die Kavität 36 hinein. Es erfolgt dann ein Drücken der Kunststofffolie 80 gegen eine erste Formfläche in der Kavität 36 und ein partielles Verpressen der Kunststofffolie 80 über einen flexiblen Bereich 49 des Formelements 44 oder ein vollständiges Formen und Drücken der Kunststofffolie 80 über einen flexiblen Bereich 49 des Formelements 44, welcher vollständig die zweite Formfläche 45 zur finalen Formgebung für die Herstellung von Formteilen 200 darstellt. Anschließend wird das hergestellte Formteil 200 aus der Kavität 36 ausgebracht und kann einer weiteren Verarbeitung (Beschichten, Befüllen, Verschließen, Bedrucken, Stapeln, Verpacken, etc.) zugeführt werden. In weiteren Ausführungen kann eine Formeinrichtung 100 ein Formwerkzeug 30 mit einer Vielzahl an Kavitäten 36 und korrespondierenden Formelementen 44 (siehe Fig. 2 bis 8, 10, 11 bis 13, und 15) aufweisen.

In Ausführungen mit einem Formwerkzeug 30 zur Verarbeitung von faserhaltigem Material kann dieses als Vorformling, als Fasermatte oder als loses Fasermaterial über die Zuführeinrichtung 20 in mindestens eine Kavität 36 mindestens eines Formwerkzeugs 30 eingebracht werden. In weiteren Ausführungen kann das faserhaltige Material befeuchtet werden, um beim anschließenden Verpressen die Bindungswirkung zwischen den Fasern des faserhaltigen Materials zu verbessern. Hierzu wird Dampf in eine Kavität 36 eingebracht, nachdem das faserhaltige Material in die Kavität 36 eingebracht wurde. Vorzugsweise erfolgt das Einbringen von Dampf unter Druck. Hierzu kann das Einbringen von Wasserdampf im zumindest teilweise geschlossenen Zustand des Formwerkzeugs 30 erfolgen. In weiteren Ausführungen kann über Kanäle und Öffnungen in ersten Formflächen 37 und/oder zweiten Formflächen 45 im geschlossenen Zustand des Formwerkzeugs ein Dampf direkt in die Faserschicht eingebracht werden. Geeignete Drücke liegen im Bereich von 1 bis 25 bar, wobei der Druck von mehreren Faktoren (Dimension und Geometrie des herzustellenden Formteils 200, Schichtdicke der Faserschicht, faserhaltiges Material als Vorformling, Matte oder lose Fasern, Eigenschaften des faserhaltigen Materials, etc.) abhängt. Das Einbringen von Feuchtigkeit mittels Dampfs hat sich dabei als sehr effiziente Methode herausgestellt, um die Feuchtigkeit schnell in die Fasern des faserhaltigen Materials zu bringen. In noch weiteren Ausführungen kann eine Formeinrichtung 100 auch eine Vorformstation aufweisen, in welcher Vorformlinge erzeugt werden. Hierzu können ferner in weiteren Ausführungen Formeinrichtungen 100 zusätzlich oder alternativ einen Vorratsbehälter für formbares Material aufweisen. Schließlich kann eine Formeinrichtung 100 eine Vorrichtung zur Entnahme und zur weiteren Verarbeitung geformter Formteile 200 aufweisen.

Fig. 2 zeigt eine schematische Darstellung eines Formwerkzeugs 30 zur Herstellung von Formteilen 200. Das Formwerkzeug 30 weist eine erste Werkzeugkomponente 32 und eine zweite Werkzeugkomponente 40 auf, welche eine erste Werkzeugplatte 34 bzw. eine zweite Werkzeugplatte 42 aufweisen. Die Werkzeugplatten 34 und 42 können bspw. aus einem Metall bzw. einer Metalllegierung bestehen. In weiteren nicht dargestellten Ausführungen kann eine erste Werkzeugplatte 34 mehrere Kavitäten 36 aufweisen, die in der Werkzeugplatte 34 angeordnet sind. Anders als in den Ausführungsbeispielen gezeigt, können auf einer Werkzeugplatte 34 ein oder mehrere Formen mit Kavitäten 36 angeordnet sein. Solche Formen können bspw. austauschbar mit der Werkzeugplatte 34 verbunden, bspw. verschraubt, sein.

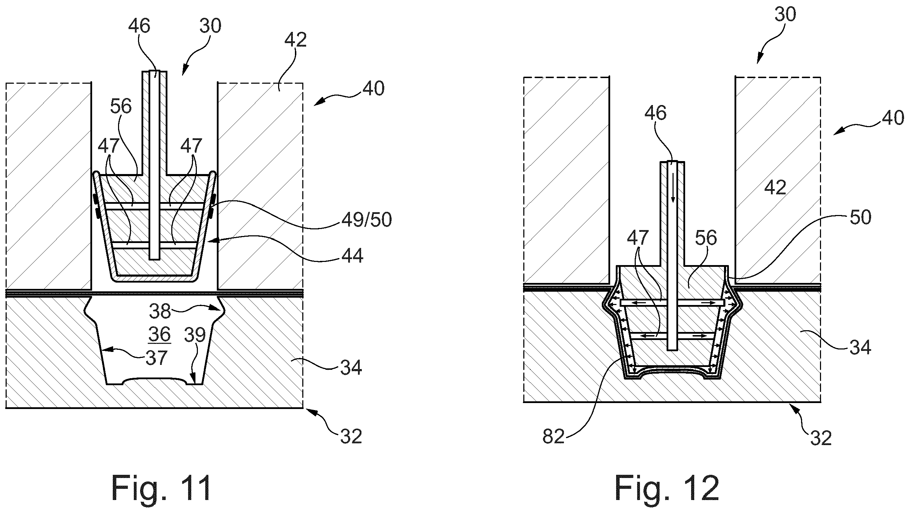

Die Kavität 36 weist eine formgebende erste Formfläche 37 auf. Die erste Formfläche 37 definiert die äußere Form des herzustellenden Formteils 200, welches im gezeigten Ausführungsbeispiel ein rotationssymmetrischer Körper ist. In weiteren Ausführungen können auch nicht rotationssymmetrische Formteile in entsprechend geformten Kavitäten hergestellt werden. Die erste Formfläche 37 kann in weiteren Ausführungen im oberen Bereich einen umlaufenden Hinterschnitt 38 aufweisen, wie in den Ausführungsbeispielen der Fig. 11 bis 13 vorgesehen. Die erste Formfläche 37 weist ferner in einem unteren Bodenbereich einen umlaufenden Randbereich 39 auf. Die direkt an die Kavität 36 angrenzende Oberfläche der Werkzeugplatte 34 kann eine ringförmige Formfläche ausbilden, die zur Ausbildung eines Rands 230 eines Formteils 200 dient, wie in den Fig. 9 und 14 schematisch gezeigt, und damit auch Teil der ersten Formfläche 37 sein kann. Die Oberfläche der ersten Formfläche 37 kann in weiteren Ausführungen eine Antihaftbeschichtung aufweisen und/oder zur Reduzierung der Haftwirkung ausgebildet sein. Unterhalb der ersten Formfläche 37 und/oder innerhalb der ersten Werkzeugplatte 34 können Heizeinrichtungen vorgesehen sein, die über eine Steuerung 10 ansteuerbar sind, um die erste Werkzeugplatte 34 und hierüber die erste Formfläche 37 zu beheizen. Durch eine Temperierung der ersten Formfläche 37 kann die Verformung eines eingebrachten Materials (bspw. Polymerfolie oder faserhaltiges Material) unterstützt und gezielt beeinflusst werden.

An der zweiten Werkzeugplatte 42 ist ein Formelement 44 angeordnet, welches so zu der darunter angeordneten Kavität 36 ausgerichtet ist, dass das Formelement 44 in die Kavität 36 eintauchen kann. Das Formelement 44 kann bspw. über entsprechende Mittel mit der Werkzeugplatte 42 und einem Antriebsmittel verbunden sein, um eine Bewegung nach unten in Richtung der Kavität 36 sowie aus der Kavität 36 heraus durchzuführen. In weiteren Ausführungen mit mehreren Kavitäten 36 sind an der Werkzeugplatte 42 mehrere korrespondierende Formelemente 44 angeordnet.

Das Formelement 44 weist einen Formkörper 56 auf, an dessen äußerer Oberfläche ein flexibles Material 50 angebracht ist. Der Formkörper 56 besteht in dem gezeigten Ausführungsbeispiel aus Metall (z.B. Aluminium). In noch weiteren Ausführungen kann der Formkörper 56 aus einem harten, nicht verformbaren Kunststoff oder einem keramischen Material bestehen. Das flexible Material 50 ist derart mit dem Formkörper 56 verbunden, so dass sich dieses durch Einbringen von Druckluft oder eines anderen Mediums vom Formkörper 56 entfernen kann. Das flexible Material 50 ist in dem gezeigten Ausführungsbeispiel von Fig. 2 im oberen Bereich des Formkörpers 56, welcher nicht zum Verpressen und der Formgebung eines eingebrachten formbaren Materials dient, fest mit dem Formkörper 56 verbunden, so dass auch keine eingebrachte Druckluft im Verbindungsbereich entweichen kann. In weiteren Ausführungen kann die Befestigung an mehreren Stellen erfolgen und unterschiedlich zur gezeigten Ausführungsform sein. Ferner sind bei Ausführungen mit mehreren flexiblen Materialien diese jeweils an entsprechenden Stellen mit einem Formkörper 56 verbunden. Über einen Hauptkanal 46 und Nebenkanäle 47 im Formkörper 56 sowie mindestens einen Zuführkanal in der Verbindungsstange zwischen Formkörper 56 und weiteren Formwerkzeugeinrichtungen, wie bspw. einem Antrieb, kann von einer Zuführeinheit Druckluft bereitgestellt werden. Zusätzlich kann hierüber eingebrachte Druckluft wieder abgesaugt werden. Für die Regelung der Zu- und Abfuhr von eingebrachtem Medium bzw. Druckluft können Ventile und/oder andere Vorrichtungen vorgesehen sein. In weiteren Ausführungsformen kann ein Medium bzw. Druckluft auch in unterschiedlichen Bereichen zeitlich versetzt und/oder mit einem unterschiedlichen Druck eingebracht werden, um ein korrespondierendes, in diesen Bereichen befindliches flexibles Material 50 entsprechend stärker oder schwächer bzw. zeitlich versetzt zu verformen.

Die Oberfläche des eintauchenden Formbereichs bildet die zweite Formfläche 45. Analog zu einer ringförmigen Oberfläche als Teil der ersten Formfläche 37 kann das Formelement 44 einen korrespondierenden gegenüberliegenden Formabschnitt aufweisen, der ebenfalls vom flexiblen Material 50 überdeckt sein kann und auch mittels eines eingebrachten Mediums (bspw. Druckluft) verformbar ist. Diese der ringförmigen Oberfläche des ersten Werkzeugkörpers 34 gegenüberliegende Oberfläche des oberen Formbereichs des Formelements 44 kann ebenfalls einen Teil der zweiten Formfläche 45 bilden. Gemäß der Ausführung der Kavität 36 für rotationssymmetrische Formteile 200 ist auch das Formelement 44 mindestens im Bereich, der für das Formen von Formteilen 200 erforderlich ist, im gezeigten Ausführungsbeispiel rotationssymmetrisch ausgebildet.

In weiteren Ausführungsformen können mehrere Nebenkanäle 47 vorgesehen sein, die sich in verschiedenen Bereichen des Formkörpers 56 befinden. Die Ausbildung der Nebenkanäle 47 kann auch gekrümmt ausgeführt sein, um beispielsweise eine gerichtete Ausströmung von Druckluft oder eines anderen Mediums zu bewirken. Darüber hinaus können sowohl die Durchmesser und Querschnittsformen der Nebenkanäle 47 sowie des Hauptkanals 46 und von Austrittsöffnungen für ein Medium an der Oberfläche des Formkörpers 56 unterschiedlich ausgebildet sein, um eine gezielte Einbringung von Druckluft zu gewährleisten, damit sich das flexible Material 50, welches die zweite Formfläche 45 bildet, entsprechend der erforderlichen Ausdehnung für ein Verpressen von formbarem Material verhält bzw. verformt. Hierbei ist im Hinblick auf die gewählte Ausführungsform zu berücksichtigen, ob die zweite Formfläche 45 vollständig durch das flexible Material 50 gebildet wird, oder das flexible Material 50 nur einen Bereich der zweiten Formfläche 45 bildet.

Das flexible Material 50 kann beispielsweise im oberen Randbereich des Formkörpers 56 fest mit diesem verklebt sein. Beim Einbringen von Druckluft über die Kanäle 46, 47 erfolgt dann ein "Aufblähen" des flexiblen Elements 50, wodurch die zweite Formfläche 45 gegen die erste Formfläche 37 der Kavität 36 gedrückt wird. Die Verbindung von flexiblen Material 50 mit einem Formkörper 56 kann grundsätzlich durch Verkleben oder jede andere geeignete Verbindungsart erreicht werden. In weiteren Ausführungen kann flexibles Material 50 auch mechanisch mit dem Formkörper 56 verbunden sein. Bspw. können Befestigungsringe oder eine Befestigungshülse verwendet werden, die über einen Formkörper 56 geschoben werden.

In dem gezeigten Ausführungsbeispiel von Fig. 2 ist die zweite Formfläche 45 vollständig durch ein flexibles Material 50 gebildet. Als flexibles Material wird ein solches Material verwendet, das die erforderlichen Eigenschaften hat, um ab einem bestimmbaren Druck über das eingebrachte Medium innerhalb der Kavität 36 verformt zu werden, wodurch zwischen dem verformten Bereich des flexiblen Materials 50 und dem Formkörper 56 ein "Luftkissen" gebildet wird.

Die Auswahl an flexiblen Materialien 50 hat dabei im Hinblick auf die gewünschte Verformung zur Herstellung von Formteilen 200 zu erfolgen, wobei die Auswahl auch nach Maßgabe des eingebrachten Materials, der Geometrie der Kavität 36 und des herzustellenden Formteils 200 und der am Prozess der Herstellung beteiligten Komponenten sowie Eigenschaften der verwendeten Materialien erfolgen kann.

Bei der Verformung über das flexible Material 50 ist darauf zu achten, dass ein flexibles Material 50 so und an den Stellen eingesetzt wird, dass eine gezielte Verformung des flexiblen Materials 50 durch Einbringen eines Mediums erfolgen kann.

Geeignete Materialen für das flexible Material 50 sind bspw. thermoplastische Elastomere oder Silikone. Für die Beeinflussung der Verformbarkeit können in den flexiblen Materialien 50 Zusätze eingebracht sein. Alternativ oder zusätzlich kann durch Einbringen von Elementen aus einem anderen Material, bspw. einem Drahtring oder Drahtgeflecht, die Verformung in diesem Bereich angepasst werden und dabei geringer ausfallen als in dem Abschnitt eines flexiblen Materials 50 ohne solche Elemente. Weiterhin können in einem flexiblen Material 50 zusätzlich oder alternativ Schwachstellen ausgebildet sein. Schwachstellen können bspw. Bereiche des flexiblen Materials 50 mit Freiräumen sein, wobei sich die Freiräume zum Beispiel ringförmig konzentrisch zur Hochachse durch die Kavität 36 und/oder geradlinig entlang der zweiten Formfläche 45 erstrecken können (bspw. auf der dem Formkörper 56 zugewandten Seite zur Ausbildung von planen zweiten Formflächen 45). Solche Freiräume können bspw. auch als "Gas-/Luftblasen" innerhalb des flexiblen Materials 50 abschnittsweise vorgesehen sein. In weiteren Ausführungen können solche Schwachstellen auch dadurch ausgebildet sein, dass das flexible Material 50 in diesen Abschnitten eine geringere Dichte aufweist.

Das flexible Material 50 bewirkt bei der Formgebung des in die Kavität 36 eingebrachten formbaren Materials ein Andrücken an die erste Formfläche 37. Das formbare Material wird dabei zwischen der ersten Formfläche 37 und der zweiten Formfläche 45 verpresst bzw. in Form gebracht.

Zur Herstellung von Formteilen 200 sind die Werkzeugplatte 34 und die Werkzeugplatte 42 relativ zueinander bewegbar, so dass eingebrachtes formbares Material (z.B. Kunststofffolie) zwischen der ersten Werkzeugkomponente 32 und der zweiten Werkzeugkomponente 40 klemmend gehalten wird. Hierzu können weitere Einrichtungen, wie bspw. ein Klemmrahmen zum Halten einer Kunststofffolie 80 vorgesehen sein. Danach wird das Formelement 44 in die Kavität 36 eingebracht, wobei ein Vorstrecken der Kunststofffolie 80 erfolgt. Anschließend erfolgt das Einbringen von Medium, wobei es zu einer Verformung des flexiblen Materials 50 kommt und die Kunststofffolie 80 in der Kavität 36 über die zweite Formfläche 45 gegen die erste Formfläche 37 gedrückt wird. In der Kavität 36 kann zumindest an der ersten Formfläche 37 ein Abkühlen einer final umgeformten Kunststofffolie 82 erfolgen. Zur Verlagerung der beiden Werkzeugplatten 34 und 42 für die Formgebung können entsprechende Antriebe und Vorrichtungen, bspw. Kniehebel, vorgesehen sein, die über die Steuerung 10 ansteuerbar sind.

Insbesondere die besondere Ausbildung eines in die Kavität 36 einer ersten Werkzeugkomponente 32 eintauchenden Formelements 44 ermöglicht mit einem einfachen Aufbau und einer einfachen Ausgestaltung des Formwerkzeugs 30 bspw. die Herstellung von Formkörpern 200 mit einem geringen Aufwand und Einsatz von Ressourcen, da bspw. kein Unterdruck oder Überdruck in der Kavität 36 erzeugt werden muss. Die Verformung durch "Aufblähen" bzw. Verformen des flexiblen Materials 50 benötigt deutlich weniger Formluft und erlaubt auch eine einfachere Ausbildung von Formwerkzeugen 30, weil keine Abdichtung erfolgen muss. Darüber hinaus können über den "aufblasbaren" Abschnitt der zweiten Formfläche 45 Hinterschnitte 38 etc. (siehe Ausführungen Fig. 11 bis 13) einfach realisiert werden, ohne dass bspw. zusätzliche Schieber oder dergleichen erforderlich sind. Die Ausbildung des Formwerkzeugs 30 ermöglicht dabei zudem in weiteren Ausführungen auch die Herstellung von Formteilen 200 aus einer Folie, welche eine netzartige Struktur aufweist, weil kein Einbringen einer "Formluft" oder der Erzeugung eines Vakuums, wie bei klassischen Thermoformwerkzeugen und -verfahren notwendig, erforderlich sind.

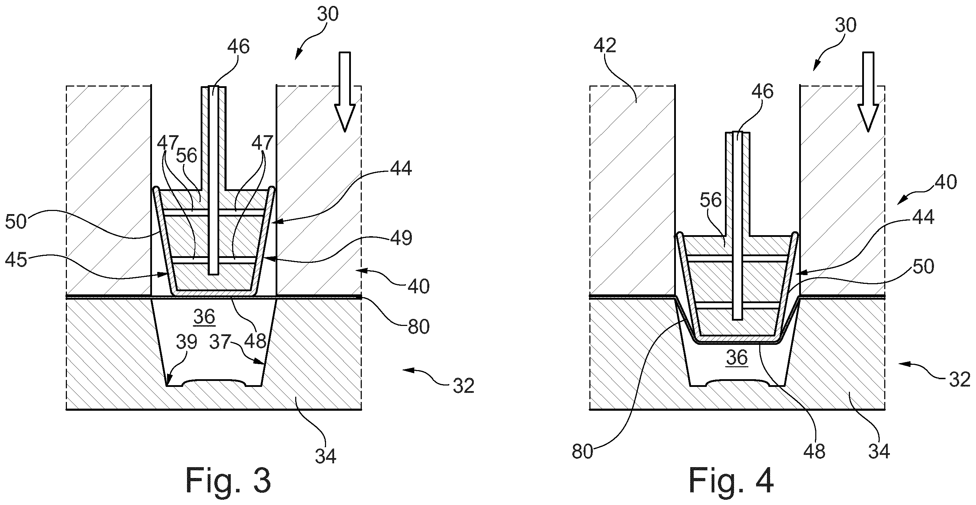

Fig. 3 zeigt eine schematische Darstellung des Formwerkzeugs 30 von Fig. 2 nach dem Einbringen eines formbaren Materials, hier einer Kunststofffolie 80. Die Kunststofffolie 80 ist zwischen die erste Werkzeugplatte 34 und die zweite Werkzeugplatte 42 über eine Fördereinrichtung eingebracht worden. In dem gezeigten Ausführungsbeispiel wurde die Kunststofffolie 80 zuvor erwärmt. Die erste Werkzeugplatte 34 und die zweite Werkzeugplatte 42 sind durch relative Verlagerung aufeinander zubewegt worden, wie durch den Pfeil angedeutet und halten somit die Kunststofffolie 80 fest in Bezug auf Position und Orientierung. Zumindest eine der Werkzeugplatten 34, 42 kann zum Halten und Klemmen erforderliche Mittel aufweisen.

Fig. 4 zeigt eine schematische Darstellung des Formwerkzeugs 30 von Fig. 2 in einem ersten Formschritt, wobei das Formelement 44 nach unten bewegt wird, wie durch den Pfeil angedeutet. Die vorgewärmte Kunststofffolie 80 wird dabei vorgestreckt. Hierbei wirkt das Formelement 44 als Streckhelfer. Durch das Strecken kommt es zu einer Reduzierung der Dicke der Kunststofffolie 80 in den gestreckten Bereichen, insbesondere in seitlichen Bereichen.

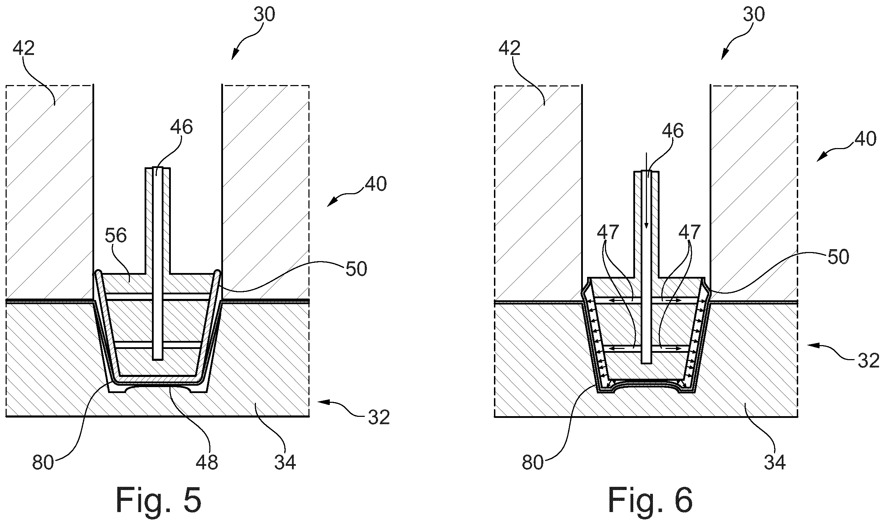

Fig. 5 zeigt eine schematische Darstellung des Formwerkzeugs 30 von Fig. 2 in einem zweiten Formschritt, nach dem das Formelement 44 seinen unteren Totpunkt erreicht hat und nicht weiter nach unten bewegt wird. Die Kunststofffolie 80 liegt in dem gezeigten Ausführungsbeispiel nur im Bereich der unteren Formfläche 48 der zweiten Formfläche 45 an der ersten Formfläche 37 an. In weiteren Ausführungsformen kann die Kunststofffolie 80 in weiteren Bereichen an der ersten Formfläche 37 anliegen, wenn insbesondere das Formelement 44 so ausgebildet ist, dass dieses in diesen Bereichen bereits die erforderliche Gestalt und Größe für die Bereitstellung eines Formdrucks aufweist.

In noch weiteren Ausführungen kann, vor allem bei Ausführungen, in welchen die Formgebung für eine Kunststofffolie 80 überwiegend über einen Teil des Formkörpers 44 erfolgt, dessen zweite Formfläche 45 nicht durch Einbringen von Druckluft oder dergleichen verformt wird, ein Überdrücken nach dem Erreichen des unteren Totpunkts erfolgen, um hierdurch den erforderlichen Formdruck bereitzustellen. Bereiche der zweiten Formfläche 45 können durch das flexible Material 50 und das dahinter befindliche "Luftkissen" bei einem Überdrücken einen Ausgleich bereitstellen und wirken sich daher nicht negativ auf die Formgebung in diesem Bereich aus.

Fig. 6 zeigt eine schematische Darstellung des Formwerkzeugs 30 von Fig. 2 in einem dritten Formschritt, wobei über den Hauptkanal 46 und die Nebenkanäle 47 Druckluft eingebracht wird. Hierbei kommt es zu einer Verformung des flexiblen Materials 50, das von dem Formkörper 56 weggedrückt wird, so dass die zweite Formfläche 45, die in dem gezeigten Ausführungsbeispiel vollständig durch das flexible Material gebildet ist, die Kunststofffolie 80 gegen die erste Formfläche 37 drückt. Wie in Fig. 6 angedeutet, kann dabei auch ein oberer Rand 230 ausgebildet werden, weil das flexible Material 50 auch in diesem Bereich einen Formdruck durch das Einbringen von Druckluft über das flexible Material 50 bereitstellt.

In dem in Fig. 6 gezeigten Formschritt kann in weiteren Ausführungen der Kunststoff der Kunststofffolie 80 im Bereich der unteren Formfläche 48 durch das Verformen des flexiblen Materials 50 in diesem Bereich mit Blick auf Fig. 6 seitlich "weggedrückt" werden, so dass dieser Bereich des Bodens 210 eines herzustellenden Formteils 200 dünner und der daneben verlaufende untere Standring 240 (siehe Fig. 9) des Bodens 210 stärker ausgebildet wird. Es kann durch die Verformung des flexiblen Materials 50 eine Materialverteilung und die Ausbildung von Bereichen mit unterschiedlicher Materialstärke erreicht werden.

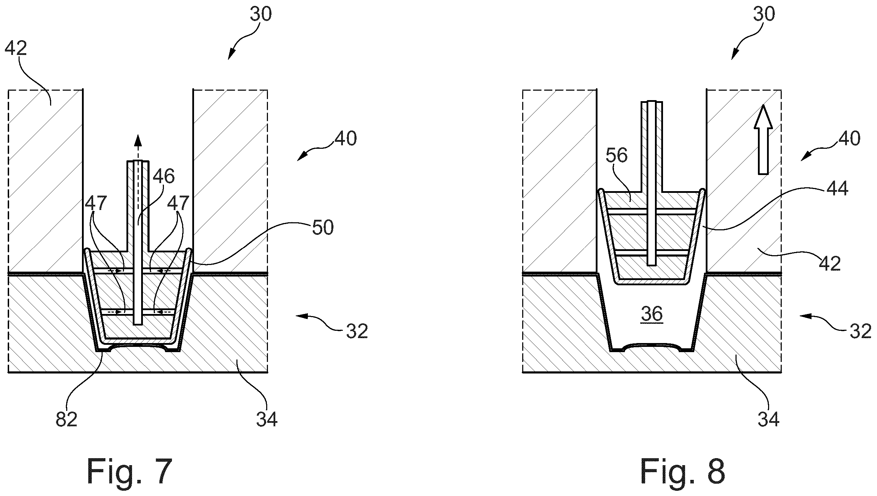

Fig. 7 zeigt eine schematische Darstellung des Formwerkzeugs 30 von Fig. 2 nach dem Umformen der Kunststofffolie 82, wobei diese nun die finale Form aufweist. Die Kunststofffolie 82 kann durch den Kontakt mit der ersten Formfläche 37 abkühlen und damit aushärten. In der Darstellung von Fig. 7 ist gezeigt, dass die eingebrachte Formluft wieder über den Hauptkanal 46 und die Nebenkanäle 47 abgeführt, bspw. abgesaugt werden kann. In weiteren Ausführungen kann das Ausbringen der Formluft oder eines anderen Mediums anderweitig erfolgen. Nachdem die Formluft abgeführt worden ist, legt sich das flexible Material 50 wieder an die Oberfläche des Formkörpers 56 an und nimmt seine ursprüngliche Form an. Der Formgebungsprozess ist dann abgeschlossen.

Anschließend erfolgt, wie Fig. 8 in einer schematischen Darstellung gezeigt, eine Bewegung des Formelements 44 nach oben aus der Kavität 36 heraus. Im Bereich der gestrichelten Linien können die Werkzeugplatten 34, 42 Schneideinrichtungen aufweisen, so dass das gefertigte Formteil 200 aus der Folienbahn herausgelöst werden kann. Hierbei können in weiteren Ausführungen auch nur eine teilweise Abtrennung des gefertigten Formteils 200 von der Folienbahn oder ein Herauslösen in einer nachgelagerten separaten Station erfolgen. Das Auswerfen eines gefertigten Formteils 200 kann analog zu der in Fig. 13 gezeigten Ausführungsform mit einem Auswerfer 60 erfolgen, der im Bereich des Bodens der Kavität 36 angeordnet sein kann.

Fig. 9 zeigt eine schematische Darstellung eines Formteils 200, das mit einem Formwerkzeug 30 der in den Fig. 2 bis 8 gezeigten Ausführungsform hergestellt sein kann. Das gezeigte Formteil 200 weist einen Boden 210 mit einem Standring 240, eine Seitenwand 220 und einen Rand 230 auf. Das Formteil 200 ist rotationssymmetrisch ausgebildet und besteht aus einer verformten Kunststofffolie 82. Das Formteil 200 ist in der gezeigten Ausführung ein Aufbewahrungsbehälter im Lebensmittelbereich und kann, je nach Dimensionierung als Schale, Becher oder als Kapsel (z.B. für Kaffee etc.) ausgebildet sein.

Fig. 10 zeigt schematische Darstellungen eines Formwerkzeugs 30 zur Herstellung von formbaren Materialien in einer weiteren Ausführungsform, wobei hier Formteile hergestellt werden können, die keinen im Wesentlichen orthogonal zur Hochachse des Formteils 200 verlaufenden Rand 230 aufweisen. Stattdessen können Formteile hergestellt werden, die einen umlaufenden Rand aufweisen, dessen Durchmesser größer ist als der Durchmesser des gefertigten Formteils in einem sich direkt darunter anschließenden Bereich. Solche Formteile können bspw. als Trinkbecher ausgebildet sein und verwendet werden.

Fig. 11 zeigt eine schematische Darstellung eines Formwerkzeugs 30 einer noch weiteren Ausführungsform mit eingebrachtem formbarem Material, hier einer Kunststofffolie 80. Der Unterschied zur Ausführung der Fig. 2 bis 8 besteht darin, dass die Kavität 36 zusätzlich einen Hinterschnitt 38 aufweist. Hierzu kann die zweite Formfläche 45 des Formelements 44 im gestrichelten Bereich ein andere flexibles Material 50 aufweisen, so dass bspw. eine stärkere Verformung dessen erreicht werden kann, um sicherzustellen, dass es zu einem im Wesentlichen gleichmäßigen Formdruck über die gesamte erste Formfläche 37 in der ersten Kavität 36 kommt.

Fig. 12 zeigt eine schematische Darstellung des Formwerkzeugs 30 von Fig. 11 während der Umformung der eingebrachten Kunststofffolie 80, wobei in dieser Ausführung ein Medium in Form von Druckluft über den Hauptkanal 46 und die Nebenkanäle 47 eingebracht wird, so dass es zu einer Verformung des flexiblen Materials 50 im Bereich der zweiten Formfläche 45 kommt. Hierbei wird das flexible Material 50 in dem in Fig. 11 gestrichelt angedeuteten Bereich stärker verformt. Die stärkere Verformung kann zum einen daher rühren, dass im Bereich des Hinterschnitts 38 mehr Raum für eine Verformung vorliegt. Zusätzlich kann die Verwendung eines speziellen flexiblen Materials 50 und dessen Ausgestaltung (bspw. Wandstärke) maßgeblich für die Verformung sein. In weiteren Ausführungen kann auch im Bereich des Hinterschnitts 38 die eingebrachte Druckluft mit einem höheren Druck bereitgestellt werden, so dass das flexible Material 50 hierdurch stärker verformt wird. Hierzu kann beispielsweise ein separater Luftkanal vorgesehen sein oder die Nebenkanäle 47 sind unterschiedlich für die jeweiligen Verformungsbereiche (Hinterschnitt 38 und restliche Bereich) ausgebildet. In weiteren Ausführungsformen kann auch über eine Ventilsteuerung die Menge an bereitgestellter Druckluft sowie deren Einströmzeitpunkt und -dauer geregelt werden. Zusätzlich können in weiteren Ausführungen Schneideinrichtungen im Bereich eines Rands 230 für ein Formteil 200 vorgesehen sein.

Fig. 13 zeigt eine schematische Darstellung eines Formwerkzeugs 30 in einer noch weiteren Ausführungsform nach der Umformung eines formbaren Materials, hier einer Kunststofffolie 80, wobei ein Auswerfer 60 zum Auswerfen eines gefertigten Formteils 200 vorgesehen ist. Der Auswerfer 60 ist mit einer Auswerferstange 64 verbunden, die wie in Fig. 13 gezeigt relativ in Richtung der Kavität 36 verlagert werden kann. Die Auswerferstange 64 ist mit einem Bodenelement 62 verbunden, das in der gezeigten Ausführungsform einen Boden der Kavität 36 bildet. Nach dem Formen des Formteils 200 kann der Auswerfer 60 vertikal nach oben verlagert werden, wobei das Formteil 200 ausgeworfen wird. Hierzu wird zuvor die zweite Werkzeugplatte 42 nach oben verlagert, um das Auswerfen zu ermöglichen. Beim Auswerfen drückt das verlagerbare Bodenelement 62 das Formteil 200 aus der Kavität 36, wobei es im Bereich der Hinterschnitte 38 kurzfristig zu einem Stauchen eines Wulsts 222 des Formteils 200 (siehe Fig. 14) kommen kann, wie durch die aufeinander zu gerichteten Pfeile angedeutet. Ein solches Auswerfen kann nach Maßgabe der Ausbildung des Wulsts 222 in der Regel ohne Probleme und eine Beschädigung des Formteils 200 erfolgen. Solche Auswurfabläufe sind im Bereich von Kunststoffteilen mit Hinterschnitten üblich.

Fig. 14 zeigt eine schematische Darstellung eines weiteren Formteils 200, das in einem Formwerkzeug 30 gemäß der in den Fig.11 bis 13 gezeigten Ausführungen hergestellt werden kann. Das Formteil 200 weist einen Boden 210 und eine sich vom Boden 210 aus erstreckende umlaufende Seitenwand 220 auf, die relativ steil vom Boden 210 aus verläuft. Im oberen Bereich der Seitenwand 220 erstreckt sich umlaufend ein Wulst 222. Am oberen Ende der Seitenwand 220 weist das Formteil 200 einen Rand 230 auf, der im Wesentlichen parallel zum Boden 210 verläuft. Die Wandstärke des Formteils 200 ist im gezeigten Ausführungsbeispiel im Boden 210, in der Seitenwand 220, im Wulst 222 und im Rand 230 überall gleich groß, kann aber in weiteren Ausführungsformen durch ein Festlegen des Abstands zwischen erster Formfläche 37 und zweiter Formfläche 45 vor dem Einbringen von Medium variiert werden, wie bspw. mit Bezug auf Fig. 6 beschrieben. Das Formteil 200 kann bspw. als Becher im Bereich von Lebensmittelverpackungen, als Blumentopf oder in einem anderen Gebiet eingesetzt werden.

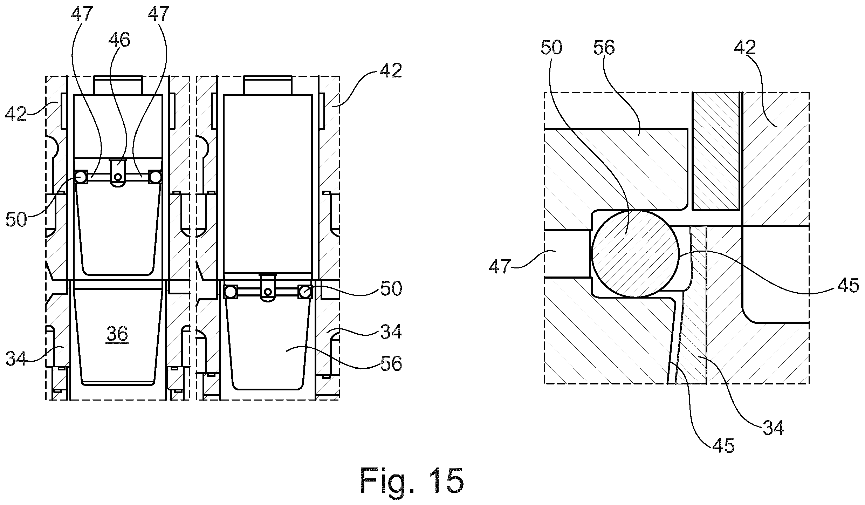

Fig. 15 zeigt schematische Darstellungen eines Formwerkzeugs 30 zur Herstellung von formbaren Materialien in einer noch weiteren Ausführungsform, wobei ein flexibles Material 50 nur in einer umlaufenden Nut im Bereich des Formkörpers 56 vorgesehen ist. In dieser Ausführungsform ist das flexible Material 50 schlauchartig ausgebildet und umgibt als Ring die Nut bzw. ist in der Nut aufgenommen. Der Ring weist vorzugsweise symmetrisch um eine Hochachse verteilt angeordnete Anschlüsse an die Nebenkanäle 47 auf. Die Ausbildung des flexiblen Materials 50 ist in dieser Ausführungsform so gewählt, dass in einem Ausgangszustand ohne Druckbeaufschlagung über eingebrachtes Medium die durch das flexible Material 50 teilweise gebildete zweite Formfläche 45 mit der restlichen zweiten Formfläche 45 des Formkörpers 56 im Wesentlichen bündig abschließt. In einer solchen Ausführungsform kann das Formen und der Formdruck für ein formbares Material (Kunststoff oder faserhaltiges Material) im Wesentlichen nur über den Formkörper 56 bereitgestellt werden. Nach der Verformung des eingebrachten Materials wird dann zusätzlich und zeitlich verzögert Druckluft oder ein anderes Medium in den umlaufenden, schlauchartigen Ring eingebracht, so dass es zu einer Verformung des flexiblen Materials 50 kommt. Somit tritt das flexible Material 50 dann aus der Nut hervor und bewirkt eine Aufweitung des formbaren Materials in diesem Bereich.

In weiteren Ausführungsformen können Öffnungen und die zugehörigen Nebenkanäle 47 auch unsymmetrisch um eine Hochachse eines herzustellenden Formteils 200 angeordnet sein, so dass bspw. der Ausbildung von Oberflächenstrukturen etc. durch eine mengen- und positionsabhängige Zufuhr von Druckluft oder eines anderen Mediums Rechnung getragen wird. In noch weiteren Ausführungsformen kann jedoch durch eine symmetrische Verteilung und Erhöhung der Anzahl an Austrittsöffnungen für das Medium eine homogene Verformung von flexiblen Material 50 sichergestellt werden.

In noch weiteren Ausführungen kann bspw. bei der Verformung von Kunststofffolien ein Einbringen von Druckluft erfolgen, um die Verformung zu unterstützen. Hierzu können bspw. in einem Formelement 44 in Bereichen ohne flexibles Material 50 entsprechende Formkanäle und Formöffnungen vorgesehen sein. Schließlich können auch in der ersten Formfläche 37 Öffnungen zum Ansaugen einer Folie vorgesehen sein, um den Formprozess zu unterstützen oder um den bei der Herstellung von Formteilen 200 aus einem faserhaltigen Material austretenden Wasserdampf abzuführen.

In noch weiteren Ausführungen kann die Ausbildung eines Formelements 44 mit einem im Kontaktbereich zwischen erster Werkzeugkomponente 32 und zweiter Werkzeugkomponente 40 vorgesehenem flexiblen Material 50 zusätzlich ein Abdichten der Kavität 36 bzw. des Formraums durch das flexible Material 50 bewirken, so dass es zu keinem Entweichen von Fasern und/oder (Form)-Luft kommen kann.

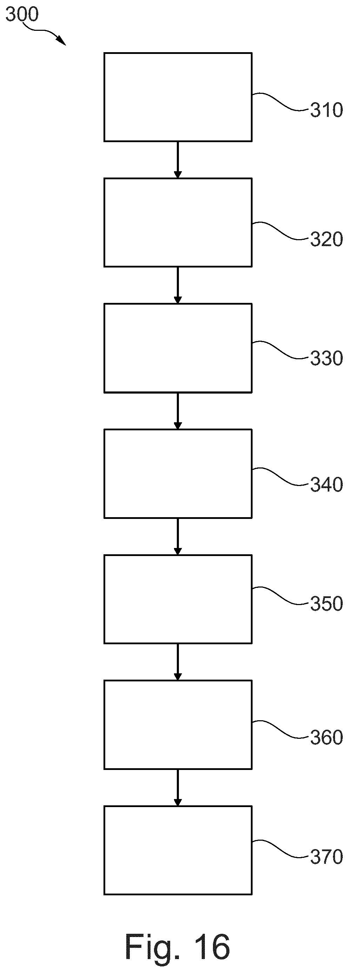

Schließlich zeigt Fig. 16 ein Verfahren 300 zum Herstellen von Formteilen 200 unter Verwendung eines Formwerkzeugs 30. In einem ersten Verfahrensschritt 310 erfolgt das Bereitstellen von formbarem Material. Das formbare Material kann je nach Art des Materials (faserhaltiges Material, Kunststofffolie) auf unterschiedliche Art und Weise bereitgestellt werden. So kann die Bereitstellung zusätzlich auch die Herstellung und/oder Verarbeitung eines formbaren Materials umfassen.

In einem nachfolgenden Verfahrensschritt 320 erfolgt ein Zuführen von formbarem Material. Beispielsweise kann bei der Herstellung von Formteilen 200 aus einem Kunststoff das Material als Folienbahn zugeführt werden. Gleiches gilt bei der Herstellung von Formteilen 200 aus Folien mit einer netzartigen Struktur. Eine Kunststofffolie 80 kann bspw. zwischen die Werkzeugplatten 34 und 42 gebracht werden, wobei die Folie dabei noch nicht in eine Kavität 36 eingebracht wird. Die Zuführung von faserhaltigem Material kann über eine Materialbahn erfolgen, die bspw. in einem vorgelagerten Verfahrensschritt hergestellt werden kann.

In einem folgenden Verfahrensschritt 330 erfolgt ein Einbringen des formbaren Materials in die Kavität 36 mindestens eines Formwerkzeugs 30. Das Einbringen von formbarem Material kann bspw. durch direktes Einbringen (z.B. Einblasen) von losen Fasern in die Kavität 36 erfolgen. Alternativ kann eine Bahn (Folie, Faserschicht) über das Formelement 44 in die Kavität 36 gedrückt werden, wie es im Thermoformen über einen Streckhelfer oder Formstempel bekannt ist, wobei das Formelement 44 als Streckhelfer dient. Das formbare Material kann über das Formelement 44 als Streckhelfer bis zum Erreichen eines unteren Totpunkts des Formelements 44 erfolgen. In weiteren Ausführungen kann dabei bereits zumindest teilweise ein ausreichender Formdruck zur Ausbildung von fertig geformten Bereichen eines Formteils 200 vorliegen.

In einem Verfahrensschritt 340 erfolgt dann ein Verpressen des formbaren Materials durch das Einbringen eines Mediums zur Verformung eines flexiblen Materials 50, so dass je nach Ausführung entweder die gesamte zweite Formfläche 45 einen ausreichenden Formdruck aufgrund der Verformung des flexiblen Materials 50 bereitstellt oder nur in einem Bereich der zweiten Formfläche 45 mit einem flexiblen Material 50 ein zusätzliches Verformen erfolgt.

Anschließend erfolgt in einem Verfahrensschritt 350 ein Druckabbau auf das flexible Material 50 durch Abführen des zuvor eingebrachten Mediums, so dass das flexible Material 50 seine unbetätigte Ausrichtung wieder einnimmt. In einem Verfahrensschritt 360 wird dann das Formwerkzeug 30 geöffnet, wobei anschließend in einem Verfahrensschritt 370 das in der Kavität 36 gefertigte Formteil 200 ausgeworfen wird. Während des Verpressens und bereits beim Einbringen des formbaren Materials in die Kavität 36 kann diese temperiert werden, um den Formprozess zu unterstützen bzw. ein Aushärten nach der Formgebung zu erreichen.

Der vorstehende Ablauf kann dann für ein neues Formteil 200 wiederholt werden.

Vorteilhafterweise lassen sich mit der hierin beschriebenen Ausführung mit einfachen Mitteln Formteile herstellen und Hinterschnitte 38 oder andere Strukturen in einem Formteil ohne aufwendige Werkzeuggestaltungen und Bewegungsabläufe realisieren. Bei der Herstellung von Formteilen aus einer Kunststofffolie 80 kann sogar vollständig auf das Einbringen von Formluft oder das Erzeugen von Vakuum verzichtet werden, so dass das Formwerkzeug 30 weiter vereinfacht ausgeführt sein kann, und die Steuerung 10 deutlich vereinfacht ist. Bei Kunststofffolien 80 und faserhaltigen Materialien können Formteile 200 erzeugt werden, welche durch gezielte Verformung eines flexiblen Materials 50 eine definierte Wanddickenausbildung bereitstellen können.

Insbesondere wird vor allem bei der Verarbeitung von Kunststofffolien 80 weniger Formluft als Medium benötigt, wie bei klassischen Thermoformverfahren. Dies kann bspw. dadurch erreicht werden, dass das Formelement 44 sowohl als Streckhelfer dient als auch durch eine zweite Formfläche 45 aus einem flexiblen Material 50 "aufgeblasen" wird, um die finale Formgebung für eine Kunststofffolie 80 zu erreichen.

### Bezugszeichenliste

- 10: Steuerung
- 20: Zuführeinrichtung
- 30: Formwerkzeug
- 32: erste Werkzeugkomponente
- 34: erste Werkzeugplatte
- 36: Kavität
- 37: erste Formfläche
- 38: Hinterschnitt
- 39: Randbereich
- 40: zweite Werkzeugkomponente
- 42: zweite Werkzeugplatte
- 44: Formelement
- 45: zweite Formfläche
- 46: Hauptkanal
- 47: Nebenkanal
- 48: untere Formfläche
- 49: Bereich
- 50: flexibles Material
- 56: Formkörper
- 60: Auswerfer
- 62: Bodenelement
- 64: Auswerferstange
- 80: Kunststofffolie
- 82: verformte Kunststofffolie
- 100: Formeinrichtung
- 200: Formteil
- 210: Boden
- 220: Seitenwand
- 222: Wulst
- 230: Rand
- 240: Standring
- 300: Verfahren
- 310: Verfahrensschritt
- 320: Verfahrensschritt
- 330: Verfahrensschritt
- 340: Verfahrensschritt
- 350: Verfahrensschritt
- 360: Verfahrensschritt
- 370: Verfahrensschritt

## Patentansprüche

1. Formwerkzeug zur Herstellung von Formteilen (200) aus einem formbaren Material mit mindestens einer ersten Werkzeugkomponente (32) und einer zweiten Werkzeugkomponente (40), wobei
- die erste Werkzeugkomponente (32) eine Kavität (36) aufweist, in welche formbares Material einbringbar ist,
- die zweite Werkzeugkomponente (40) ein Formelement (44) aufweist, das zur Herstellung eines Formteils (200) in die Kavität (36) der ersten Werkzeugkomponente (32) einbringbar ist,
- das Formelement (44) eine zweite Formfläche (45) aufweist, über welche im geschlossenen Zustand des Formwerkzeugs (30) formbares Material gegen eine korrespondierende erste Formfläche (37) der Kavität (36) der ersten Werkzeugkomponente (32) drückbar ist, und
- mindestens ein Abschnitt der zweiten Formfläche (45) ein flexibles Material (50) aufweist, welches im geschlossenen Zustand des Formwerkzeugs (50) durch Einbringen eines Mediums über das Formelement (44) verformbar ist, um das formbare Material gegen die erste Formfläche (37) zu drücken,
wobei das flexible Material (50) in einem Ruhezustand an dem Formelement (44) anliegt und das Formelement (44) in Bereichen mit einem flexiblen Material (50) Öffnungen für das Medium zur Verformung des flexiblen Materials (50) aufweist,
**gekennzeichnet dadurch, dass**
sich die Öffnungen in Form, Ausgestaltung und/oder Position nach Maßgabe der Materialstärke des flexiblen Materials (50), der Zusammensetzung des flexiblen Materials (50), der Position/Lage des flexiblen Materials (50), des eingesetzten flexiblen Materials (50) und/oder der Ausbildung der ersten Formfläche (37) voneinander unterscheiden.

2. Formwerkzeug nach Anspruch 1, wobei die Kavität (36) mindestens einen Hinterschnitt (38) aufweist und das formbare Material durch den mindestens partiell ein flexibles Material (50) aufweisenden mindestens einen Abschnitt der zweiten Formfläche (45) in den Hinterschnitt (38) der Kavität (36) drückbar ist.

3. Formwerkzeug nach Anspruch 1 oder 2, wobei die im geschlossenen Zustand des Formwerkzeugs (30) in die Kavität (36) der ersten Werkzeugkomponente (32) eintauchende zweite Formfläche (45) vollständig durch ein flexibles Material (50) gebildet ist.

4. Formwerkzeug nach einem der Ansprüche 1 bis 3, wobei die zweite Formfläche (45) Bereiche mit einer unterschiedlichen Struktur oder Materialstärke des flexiblen Materials (50) aufweist.

5. Formwerkzeug nach einem der Ansprüche 1 bis 4, wobei die zweite Formfläche (45) mindestens zwei unterschiedliche flexible Materialien (50) aufweist, die sich im Hinblick auf die Verformbarkeit des flexiblen Materials (50) unterscheiden.

6. Formwerkzeug nach Anspruch einem der Ansprüche 1 bis 5, wobei das flexible Material (50) sich ringförmig um das Formelement (44) erstreckt.

7. Formwerkzeug nach einem der Ansprüche 1 bis 6, wobei das flexible Material (50) Verstärkungen und/oder Schwachstellen aufweist, welche die Verformbarkeit des flexiblen Materials (50) beeinflussen.

8. Formwerkzeug nach einem der Ansprüche 1 bis 7, wobei die zweite Formfläche (45) mindestens zwei Abschnitte aus einem flexiblen Material (50) aufweist, die sich im Hinblick auf die Verformbarkeit des flexiblen Materials (50) unterscheiden.

9. Formwerkzeug nach einem der Ansprüche 1 bis 8, wobei das flexible Material (50) Silikon und/oder thermoplastische Elastomere aufweist oder daraus besteht.

10. Formwerkzeug nach einem der Ansprüche 1 bis 9, wobei die Kavität (36) der ersten Werkzeugkomponente (32) und/oder das Formelement (44) der zweiten Werkzeugkomponente (40) über mindestens eine Heizeinrichtung beheizbar sind.

11. Verfahren zur Herstellung von Formteilen (200) aus einem formbaren Material unter Verwendung eines Formwerkzeugs (30) mit mindestens einer ersten Werkzeugkomponente (32) und mindestens einer zweiten Werkzeugkomponente (40), wobei die erste Werkzeugkomponente (32) eine Kavität (36) mit einer ersten Formfläche (37) aufweist, und wobei die zweite Werkzeugkomponente (40) ein Formelement (44) mit einer zweiten Formfläche (45) aufweist, welche mindestens partiell ein flexibles Material (50) aufweist, das mindestens einen Abschnitt der zweiten Formfläche (45) bildet, wobei das flexible Material (50) in einem Ruhezustand an dem Formelement (44) anliegt und das Formelement (44) in Bereichen mit dem flexiblen Material (50) Öffnungen für das Medium zur Verformung des flexiblen Materials (50) aufweist,
wobei sich die Öffnungen in Form, Ausgestaltung und/oder Position nach Maßgabe der Materialstärke des flexiblen Materials (50), der Zusammensetzung des flexiblen Materials (50), der Position/Lage des flexiblen Materials (50), des eingesetzten flexiblen Materials (50) und/oder der Ausbildung der ersten Formfläche (37) voneinander unterscheiden, wobei das Verfahren folgende Schritte aufweist:
- Einbringen eines formbaren Materials in die Kavität (36) der ersten Werkzeugkomponente (32),
- Einbringen des Formelements (44) der zweiten Werkzeugkomponente (40) in die Kavität (36) der mindestens einen ersten Werkzeugkomponente (32) durch relative Verlagerung der mindestens einen ersten Werkzeugkomponente (32) und des Formelements (44), wobei die zweite Formfläche (45) des Formelements (44) das formbare Material mindestens bereichsweise gegen die erste Formfläche (37) bewegt, und
- Einbringen eines Mediums über das Formelement (44) im Bereich des flexiblen Materials (50), wodurch das flexible Material (50) verformt wird und durch die Verformung das flexible Material (50) das formbare Material gegen einen korrespondierenden Abschnitt der ersten Formfläche (37) drückt.

12. Verfahren nach Anspruch 11, wobei die Kavität (36) mindestens einen Hinterschnitt (38) aufweist und das formbare Material über das flexible Material (50) des mindestens einen Abschnitts der zweiten Formfläche (45) beim Einbringen des Mediums in den Hinterschnitt (38) der Kavität (36) gedrückt wird.

13. Verfahren nach Anspruch 11 oder 12, wobei nach dem Formen des Formteils (200) in der Kavität (36) das Einbringen von Medium beendet wird, wodurch das flexible Material (50) seine vor dem Einbringen von Medium vorliegende Form wieder einnimmt und anschließend das Formelement (44) der zweiten Werkzeugkomponente (40) aus der Kavität (36) bewegt wird.

## Claims

1. Moulding tool for producing moulded parts (200) from a mouldable material, comprising at least one first tool component (32) and a second tool component (40), wherein
- the first tool component (32) has a cavity (36) into which mouldable material can be introduced,
- the second tool component (40) has a moulding element (44) which can be introduced into the cavity (36) of the first tool component (32) in order to produce a moulded part (200),
- the moulding element (44) has a second moulding surface (45) via which, in the closed state of the moulding tool (30), mouldable material can be pressed against a corresponding first moulding surface (37) of the cavity (36) of the first tool component (32), and
- at least one portion of the second moulding surface (45) comprises a flexible material (50) which, in the closed state of the moulding tool (50), is deformable by introducing a medium via the moulding element (44) in order to press the mouldable material against the first moulding surface (37),
wherein the flexible material (50) rests against the moulding element (44) in a rest state and the moulding element (44) has, in regions with a flexible material (50), openings for the medium for deforming the flexible material (50), **characterised in that** the openings differ from one another in shape, configuration and/or position depending on the material thickness of the flexible material (50), the composition of the flexible material (50), the position/location of the flexible material (50), the flexible material (50) used and/or the design of the first moulding surface (37).

2. Moulding tool according to claim 1, wherein the cavity (36) has at least one undercut (38) and the mouldable material can be pressed into the undercut (38) of the cavity (36) by the at least one portion of the second moulding surface (45), which portion at least partially comprises a flexible material (50).

3. Moulding tool according to claim 1 or 2, wherein the second moulding surface (45) that plunges into the cavity (36) of the first tool component (32) in the closed state of the moulding tool (30) is formed entirely by a flexible material (50).

4. Moulding tool according to any one of claims 1 to 3, wherein the second moulding surface (45) has regions with a differing structure or material thickness of the flexible material (50).

5. Moulding tool according to any one of claims 1 to 4, wherein the second moulding surface (45) comprises at least two different flexible materials (50) which differ with regard to the deformability of the flexible material (50).

6. Moulding tool according to any one of claims 1 to 5, wherein the flexible material (50) extends annularly around the moulding element (44).

7. Moulding tool according to any one of claims 1 to 6, wherein the flexible material (50) has reinforcements and/or weak points which influence the deformability of the flexible material (50).

8. Moulding tool according to any one of claims 1 to 7, wherein the second moulding surface (45) has at least two portions made of a flexible material (50) which differ with regard to the deformability of the flexible material (50).

9. Moulding tool according to any one of claims 1 to 8, wherein the flexible material (50) comprises or consists of silicone and/or thermoplastic elastomers.

10. Moulding tool according to any one of claims 1 to 9, wherein the cavity (36) of the first tool component (32) and/or the moulding element (44) of the second tool component (40) can be heated by means of at least one heating device.

11. Method for producing moulded parts (200) from a mouldable material using a moulding tool (30) comprising at least one first tool component (32) and at least one second tool component (40), wherein the first tool component (32) has a cavity (36) with a first moulding surface (37), and wherein the second tool component (40) has a moulding element (44) with a second moulding surface (45), which second moulding surface (45) at least partially comprises a flexible material (50) that forms at least one portion of the second moulding surface (45), wherein the flexible material (50) rests against the moulding element (44) in a rest state and the moulding element (44) has, in regions with the flexible material (50), openings for the medium for deforming the flexible material (50),
wherein the openings differ from one another in shape, configuration and/or position depending on the material thickness of the flexible material (50), the composition of the flexible material (50), the position/location of the flexible material (50), the flexible material (50) used and/or the design of the first moulding surface (37), wherein the method comprises the following steps:
- introducing a mouldable material into the cavity (36) of the first tool component (32), introducing the moulding element (44) of the second tool component (40) into the cavity (36) of the at least one first tool component (32) by relative displacement of the at least one first tool component (32) and of the moulding element (44), wherein the second moulding surface (45) of the moulding element (44) moves the mouldable material at least in regions against the first moulding surface (37), and
- introducing a medium via the moulding element (44) in the region of the flexible material (50), whereby the flexible material (50) is deformed and, as a result of the deformation, the flexible material (50) presses the mouldable material against a corresponding portion of the first moulding surface (37).

12. Method according to claim 11, wherein the cavity (36) has at least one undercut (38) and, when the medium is introduced, the mouldable material is pressed into the undercut (38) of the cavity (36) via the flexible material (50) of the at least one portion of the second moulding surface (45).

13. Method according to claim 11 or 12, wherein, after the moulding of the moulded part (200) in the cavity (36), the introduction of medium is stopped, whereby the flexible material (50) resumes the shape it had before the introduction of medium, and the moulding element (44) of the second tool component (40) is subsequently moved out of the cavity (36).

## Revendications

1. Outil de moulage pour la fabrication de pièces moulées (200) en un matériau moulable, comprenant au moins un premier composant d'outil (32) et un deuxième composant d'outil (40), dans lequel
- le premier composant d'outil (32) comporte une cavité (36) dans laquelle du matériau moulable peut être introduit,
- le deuxième composant d'outil (40) comporte un élément de moulage (44) qui peut être introduit dans la cavité (36) du premier composant d'outil (32) pour fabriquer une pièce moulée (200),
- l'élément de moulage (44) comporte une deuxième surface de moulage (45) par l'intermédiaire de laquelle, à l'état fermé de l'outil de moulage (30), du matériau moulable peut être pressé contre une première surface de moulage (37) correspondante de la cavité (36) du premier composant d'outil (32), et
- au moins une portion de la deuxième surface de moulage (45) comprend un matériau flexible (50) qui, à l'état fermé de l'outil de moulage (50), est déformable par introduction d'un fluide par l'intermédiaire de l'élément de moulage (44), afin de presser le matériau moulable contre la première surface de moulage (37),
dans lequel le matériau flexible (50), dans un état de repos, est en appui contre l'élément de moulage (44) et l'élément de moulage (44) comporte, dans des zones comportant un matériau flexible (50), des ouvertures pour le fluide servant à déformer le matériau flexible (50), **caractérisé en ce que** les ouvertures se distinguent les unes des autres par leur forme, leur configuration et/ou leur position en fonction de l'épaisseur du matériau flexible (50), de la composition du matériau flexible (50), de la position/de l'emplacement du matériau flexible (50), du matériau flexible (50) utilisé et/ou de la conformation de la première surface de moulage (37).

2. Outil de moulage selon la revendication 1, dans lequel la cavité (36) présente au moins une contre-dépouille (38) et le matériau moulable peut être pressé dans la contre-dépouille (38) de la cavité (36) par l'au moins une portion de la deuxième surface de moulage (45), laquelle portion comprend au moins partiellement un matériau flexible (50).

3. Outil de moulage selon la revendication 1 ou 2, dans lequel la deuxième surface de moulage (45) qui, à l'état fermé de l'outil de moulage (30), plonge dans la cavité (36) du premier composant d'outil (32) est entièrement formée par un matériau flexible (50).

4. Outil de moulage selon l'une quelconque des revendications 1 à 3, dans lequel la deuxième surface de moulage (45) présente des zones dans lesquelles le matériau flexible (50) a une structure différente ou une épaisseur différente.

5. Outil de moulage selon l'une quelconque des revendications 1 à 4, dans lequel la deuxième surface de moulage (45) comprend au moins deux matériaux flexibles (50) différents qui se distinguent du point de vue de la déformabilité du matériau flexible (50).

6. Outil de moulage selon l'une quelconque des revendications 1 à 5, dans lequel le matériau flexible (50) s'étend de manière annulaire autour de l'élément de moulage (44).

7. Outil de moulage selon l'une quelconque des revendications 1 à 6, dans lequel le matériau flexible (50) présente des renforts et/ou des points faibles qui influencent la déformabilité du matériau flexible (50).

8. Outil de moulage selon l'une quelconque des revendications 1 à 7, dans lequel la deuxième surface de moulage (45) présente au moins deux portions en un matériau flexible (50) qui se distinguent du point de vue de la déformabilité du matériau flexible (50).

9. Outil de moulage selon l'une quelconque des revendications 1 à 8, dans lequel le matériau flexible (50) comprend du silicone et/ou des élastomères thermoplastiques ou en est constitué.

10. Outil de moulage selon l'une quelconque des revendications 1 à 9, dans lequel la cavité (36) du premier composant d'outil (32) et/ou l'élément de moulage (44) du deuxième composant d'outil (40) peuvent être chauffés au moyen d'au moins un dispositif de chauffage.

11. Procédé de fabrication de pièces moulées (200) en un matériau moulable en utilisant un outil de moulage (30) comprenant au moins un premier composant d'outil (32) et au moins un deuxième composant d'outil (40), dans lequel le premier composant d'outil (32) comporte une cavité (36) ayant une première surface de moulage (37), et dans lequel le deuxième composant d'outil (40) comporte un élément de moulage (44) ayant une deuxième surface de moulage (45), laquelle comprend au moins partiellement un matériau flexible (50) qui forme au moins une portion de la deuxième surface de moulage (45), dans lequel le matériau flexible (50), dans un état de repos, est en appui contre l'élément de moulage (44) et l'élément de moulage (44) comporte, dans des zones comportant le matériau flexible (50), des ouvertures pour le fluide servant à déformer le matériau flexible (50),
dans lequel les ouvertures se distinguent les unes des autres par leur forme, leur configuration et/ou leur position en fonction de l'épaisseur du matériau flexible (50), de la composition du matériau flexible (50), de la position/de l'emplacement du matériau flexible (50), du matériau flexible (50) utilisé et/ou de la conformation de la première surface de moulage (37), le procédé comprenant les étapes suivantes :
- introduction d'un matériau moulable dans la cavité (36) du premier composant d'outil (32), introduction de l'élément de moulage (44) du deuxième composant d'outil (40) dans la cavité (36) de l'au moins un premier composant d'outil (32) par déplacement relatif de l'au moins un premier composant d'outil (32) et de l'élément de moulage (44), la deuxième surface de moulage (45) de l'élément de moulage (44) déplaçant le matériau moulable au moins par zones contre la première surface de moulage (37), et
- introduction d'un fluide par l'intermédiaire de l'élément de moulage (44) dans la zone du matériau flexible (50), ce par quoi le matériau flexible (50) est déformé et, du fait de la déformation, le matériau flexible (50) presse le matériau moulable contre une portion correspondante de la première surface de moulage (37).

12. Procédé selon la revendication 11, dans lequel la cavité (36) présente au moins une contre-dépouille (38) et, lors de l'introduction du fluide, le matériau moulable est pressé dans la contre-dépouille (38) de la cavité (36) par l'intermédiaire du matériau flexible (50) de l'au moins une portion de la deuxième surface de moulage (45).

13. Procédé selon la revendication 11 ou 12, dans lequel, après le moulage de la pièce moulée (200) dans la cavité (36), l'introduction de fluide est arrêtée, ce par quoi le matériau flexible (50) reprend la forme qu'il présentait avant l'introduction de fluide, puis l'élément de moulage (44) du deuxième composant d'outil (40) est déplacé hors de la cavité (36).
